(19) Europäisches Patentamt
European Patent Office
Office européen des brevets

(11) **EP 3 911 057 A1**

(12) **EUROPEAN PATENT APPLICATION**
published in accordance with Art. 153(4) EPC

(43) Date of publication:
**17.11.2021 Bulletin 2021/46**

(51) Int Cl.:
*H04W 72/02* (2009.01)     *H04W 4/40* (2018.01)
*H04W 72/04* (2009.01)     *H04W 92/18* (2009.01)

(21) Application number: **19909122.4**

(22) Date of filing: **10.01.2019**

(86) International application number:
**PCT/JP2019/000575**

(87) International publication number:
**WO 2020/144822 (16.07.2020 Gazette 2020/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **FUJITSU LIMITED**
**Kanagawa 211-8588 (JP)**

(72) Inventor: **WU, Jianming**
**Kawasaki-shi, Kanagawa 211-8588 (JP)**

(74) Representative: **Haseltine Lake Kempner LLP**
**Cheapside House**
**138 Cheapside**
**London EC2V 6BJ (GB)**

(54) **COMMUNICATION DEVICE, COMMUNICATION SYSTEM, AND COMMUNICATION METHOD**

(57)     A communication device that is able to determine a transmission resource without being scheduled by a base station device includes an acquisition unit that acquires geographic information of other communication device and a selection unit that selects the transmission resource according to the geographic information.

FIG. 7

**Description**

[Technical Field]

The present invention relates to a communication device, a communication system, and a communication method.

[Background Art]

In current networks, traffic of mobile terminals (smartphones and future phones) accounts for a majority of network resources. Furthermore, the traffic used by the mobile terminals tends to expand in the future.

Meanwhile, with development in the Internet of things (IoT) services (for example, monitoring system of traffic system, smart meters, devices, or the like), it has been demanded to cope with services including various required conditions. Consequently, in the communication standard for the 5th Generation Mobile Communication (5G or New Radio (NR)), it has been demanded that, in addition to the standard technology of the 4th Generation Mobile Communication (4G) (for example, NPLs 2 to 12), technologies, which achieve a higher data rate, a larger capacity, and lower latency.

Note that, for the 5th Generation Mobile Communication standard, the Third Generation Partnership Project (3GPP) working groups (for example, TSG-RAN WG1, TSG-RAN WG2, or the like) have been making a progress on technical study and the discussed technologies (NPL 13 to 40).

In order to support various kind of services as described above, the 5G is assumed to support of numerous use cases categorized in to, e.g.,Enhanced Mobile Broad Band (eMBB), Massive Machine Type Communications (MTC), and Ultra-Reliable and Low Latency Communication (URLLC).

Furthermore, the 3GPP working group discusses about Vehicle to Everything (V2X) communications. The V2X is, for example, a general term for Vehicle to Vehicle (V2V) for performing communication between vehicles, Vehicle to Pedestrian (V2P) for performing communication between a vehicle and a pedestrian (Pedestrian), Vehicle to Infrastructure (V2I) for performing communication between a vehicle and a road infrastructure such as signs, Vehicle to Network (V2N) for performing communication between a vehicle and a network, or the like using a sidelink channel. The provisions regarding the V2X are described in, for example, NPL 1. For example, the V2X is expected to be applied to autonomous driving technology of automobiles.

Regarding resource arrangement of the V2X, there is a method for arranging a control channel (Physical Sidelink Control CHannel: PSCCH) and a data channel (Physical Sidelink Shared CHannel: PSSCH) to be adjacent to each other and a method for arranging the control channel and the data channel not to be adjacent to each other. Note that, to a resource of the PSCCH, for example, Sidelink Control Information (SCI) including information regarding a data modulation method and a data encoding rate of the corresponding PSSCH or the like is mapped.

In the Long Term Evolution (LTE)-V2X, a method for allocating resources includes, for example, a method for centrally performing control by a mobile communication system and a method for autonomously performing control by a terminal device. The method for centrally performing control by the mobile communication system is applicable when the terminal device is in a coverage of the mobile communication system and is referred to as a mode 3. On the other hand, the method for autonomously performing control by each terminal device is applicable even when the terminal device is not in the coverage of the mobile communication system and is referred to as a mode 4. In the mode 4 of the LTE-V2X, because the terminal device and the mobile communication system do not communicate with each other to allocate resources, a transmission delay in a case where transmission data is generated in the terminal device is shortened, and it is possible to satisfy a severe delay request.

Furthermore, the working group of the 3GPP discusses resource allocation of a sidelink in the NR-V2X. This working group discusses two modes, in other words, a mode 1 and a mode 2 regarding the resource allocation of the NR-V2X. The mode 1 of the NR-V2X is, for example, a mode in which a base station schedules resources used by the terminal device (or User Equipment (UE)) as sidelink transmission. On the other hand, the mode 2 of the NR-V2X is a mode in which the terminal device determines a transmission resource (with no scheduling by base station device), for example, in the sidelink resource set (configured) by the base station device or the network or a preset sidelink resource.

Moreover, regarding the mode 2 of the NR-V2X, the working group of the 3GPP discusses four submodes, in other words, to cover from a mode 2(a) to a mode 2(d). The mode 2(a) is, for example, a mode in which the terminal device autonomously selects a sidelink resource for transmission. Furthermore, the mode 2(b) is, for example, a mode in which the terminal device assists the sidelink resource for other terminal device. Moreover, the mode 2(c) is, for example, a mode in which the terminal device uses a grant that is preset for sidelink transmission. Moreover, the mode 2(d) is, for example, a mode in which the terminal device schedules sidelink transmission of the other terminal device.

Moreover, the working group of the 3GPP also discusses that, regarding the NR-V2X, the terminal device reports assistance information including geographic information (for example, location information) related to the terminal device to a Next generation Node B (gNB).

Moreover, the working group of the 3GPP discusses that, regarding the mode 2(c) of the NR-V2X, that one or a plurality of (pre)set sidelink transmission patterns is used outside the coverage range. Furthermore, in the coverage range, it is discussed to instruct one or a plurality of sidelink transmission patterns according to the setting of the gNB. Note that, the working group has agreed that the transmission pattern is designed depending on a time and a frequency and is determined according to a size of the resource at the time and the frequency, a location of the resource at the time and the frequency, and the number of resources, or the like. Details of the sidelink transmission pattern are agendas in the further.

[Citation List]

[Non-Patent Literature]

NPL 1: 3GPP TS 22.186 V16.0.0 (2018-09)
NPL 2: 3GPP TS 36.211 V15.2.0 (2018-06)
NPL 3: 3GPP TS 36.212 V15.2.1 (2018-07)
NPL 4: 3GPP TS 36.213 V15.2.0 (2018-06)
NPL 5: 3GPP TS 36.300 V15.2.0 (2018-06)
NPL 6: 3GPP TS 36.321 V15.2.0 (2018-07)
NPL 7: 3GPP TS 36.322 V15.1.0 (2018-07)
NPL 8: 3GPP TS 36.323 V15.0.0 (2018-07)
NPL 9: 3GPP TS 36.331 V15.2.2 (2018-06)
NPL 10: 3GPP TS 36.413 V15.2.0 (2018-06)
NPL 11: 3GPP TS 36.423 V15.2.0 (2018-06)
NPL 12: 3GPP TS 36.425 V15.0.0 (2018-06)
NPL 13: 3GPP TS 37.340 V15.2.0 (2018-06)
NPL 14: 3GPP TS 38.201 V15.0.0 (2017-12)
NPL 15: 3GPP TS 38.202 V15.2.0 (2018-06)
NPL 16: 3GPP TS 38.211 V15.2.0 (2018-06)
NPL 17: 3GPP TS 38.212 V15.2.0 (2018-06)
NPL 18: 3GPP TS 38.213 V15.2.0 (2018-06)
NPL 19: 3GPP TS 38.214 V15.2.0 (2018-06)
NPL 20: 3GPP TS 38.215 V15.2.0 (2018-06)
NPL 21: 3GPP TS 38.300 V15.2.0 (2018-06)
NPL 22: 3GPP TS 38.321 V15.2.0 (2018-06)
NPL 23: 3GPP TS 38.322 V15.2.0 (2018-06)
NPL 24: 3GPP TS 38.323 V15.2.0 (2018-06)
NPL 25: 3GPP TS 38.331 V15.2.1 (2018-06)
NPL 26: 3GPP TS 38.401 V15.2.0 (2018-06)
NPL 27: 3GPP TS 38.410 V15.0.0 (2018-06)
NPL 28: 3GPP TS 38.413 V15.0.0 (2018-06)
NPL 29: 3GPP TS 38.420 V15.0.0 (2018-06)
NPL 30: 3GPP TS 38.423 V15.0.0 (2018-06)
NPL 31: 3GPP TS 38.470 V15.2.0 (2018-06)
NPL 32: 3GPP TS 38.473 V15.2.1 (2018-07)
NPL 33: 3GPP TR 38.801 V14.0.0 (2017-03)
NPL 34: 3GPP TR 38.802 V14.2.0 (2017-09)
NPL 35: 3GPP TR 38.803 V14.2.0 (2017-09)
NPL 36: 3GPP TR 38.804 V14.0.0 (2017-03)
NPL 37: 3GPP TR 38.900 V15.0.0 (2018-06)
NPL 38: 3GPP TR 38.912 V15.0.0 (2018-06)
NPL 39: 3GPP TR 38.913 V15.0.0 (2018-06)
NPL 40: 3GPP TR 37.885 V15.0.0 (2018-06)
NPL 41: 3GPP TR 22.886 V15.1.0 (2017-03)
NPL 42: "RAN1 Chairman's Notes", 3GPP TSG RAN WG1 Meeting #94, Gothenburg, Sweden, August 20th-24th, 2018

NPL 43: "RAN1 Chairman's Notes", 3GPP TSG RAN WG1 Meeting #94bis, Chengdu, China, October 8th-12th, 2018

NPL 44: "RAN1 Chairman's Notes", 3GPP TSG RAN WG1 Meeting #95, Spokane, USA, November 12th-16th, 2018

[Summary of Invention]

[Technical Problem]

As described above, in the 3GPP, regarding the mode 2(c) of the NR-V2X, it is discussed to perform communication using one or the plurality of sidelink transmission patterns.

However, when the number of transmission patterns is one and a large number of terminal devices perform communication using the V2X, there is a case where the plurality of terminal devices uses a single transmission resource. In this case, because the plurality of terminal devices uses the single transmission resource, the terminal device and the other terminal device transmit data using the same resource. Therefore, data collision may occur. On the other hand, when the plurality of transmission patterns, in a case where the number of terminal devices using the plurality of transmission patterns is small, there is a case where most transmission resources are wasted.

In this way, regardless of whether the number of transmission patterns is one or multiple, there is a case where it cannot be said that the transmission resource is efficiently used.

The disclosed technology has been made in view of the above, and an object of the disclosed technology is to provide a communication device, a communication system, and a communication method that can efficiently use transmission resources.

[Solution to Problem]

In one aspect, a communication device that is able to determine a transmission resource without being scheduled by a base station device includes an acquisition unit that acquires geographic information of other communication device and a selection unit that selects the transmission resource according to the geographic information.

[ADVANTAGEOUS EFFECTS OF INVENTION]

It is possible to provide a communication device, a communication system, and a communication method that can efficiently use transmission resources.

[Brief Description of Drawings]

[FIG. 1] FIG. 1 is a diagram illustrating an exemplary configuration of a communication system;

[FIG. 2] FIG. 2 is a diagram illustrating an exemplary configuration of a terminal device;

[FIG. 3] FIG. 3 is a diagram illustrating an example of a TFRP;

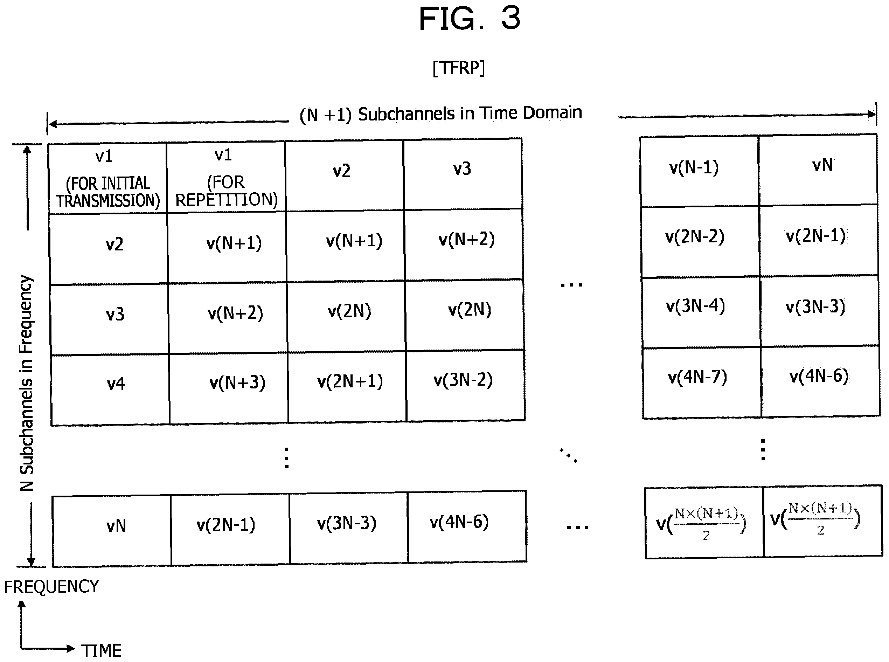

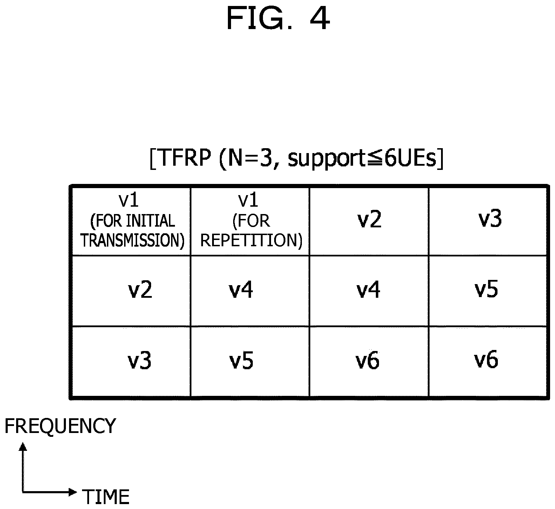

[FIG. 3] FIG. 4 is a diagram illustrating an example of the TFRP;

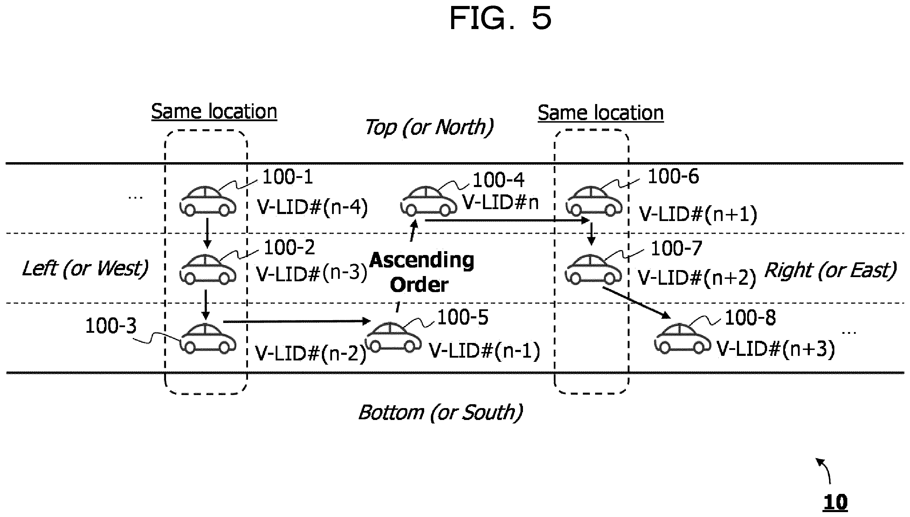

[FIG. 5] FIG. 5 is a diagram illustrating an example of a positional relationship of the terminal devices;

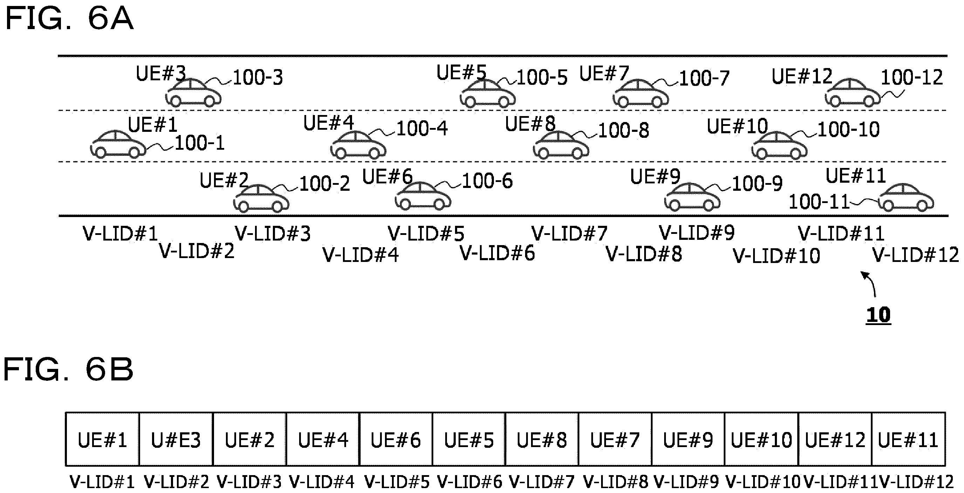

[FIG. 6] FIG. 6A is a diagram illustrating a positional relationship of the terminal devices, and FIG. 6B is a diagram illustrating an example of V-LID allocation;

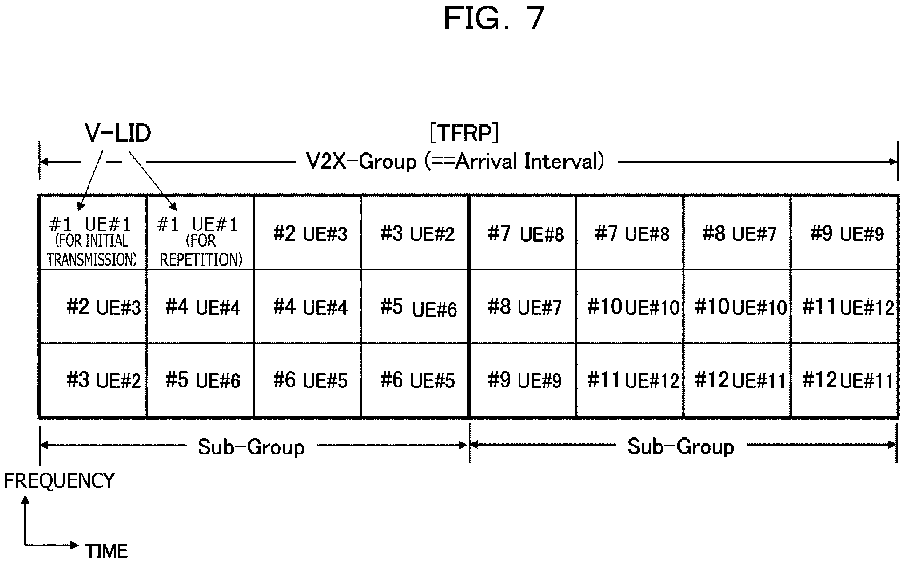

[FIG. 7] FIG. 7 is a diagram illustrating an example of resource allocation;

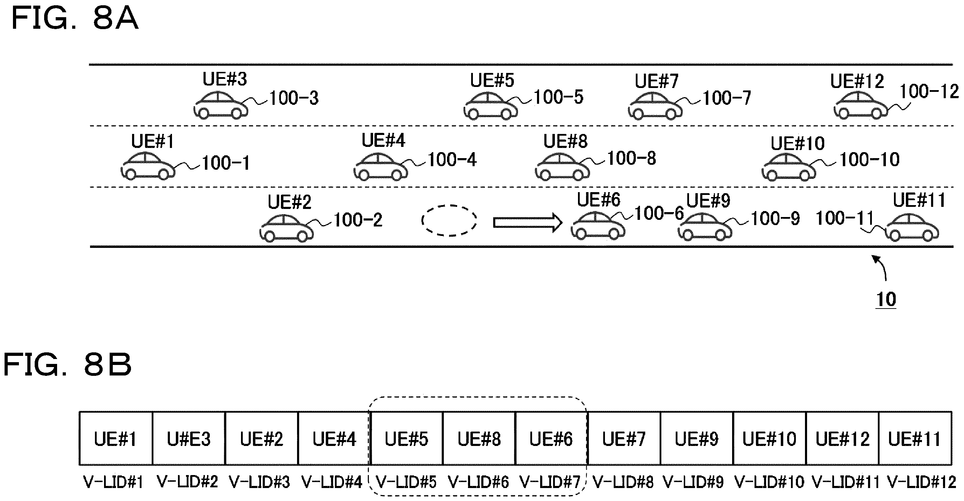

[FIG. 8] FIG. 8A is a diagram illustrating a positional relationship of the terminal devices, and FIG. 8B is a diagram illustrating an example of the V-LID allocation;

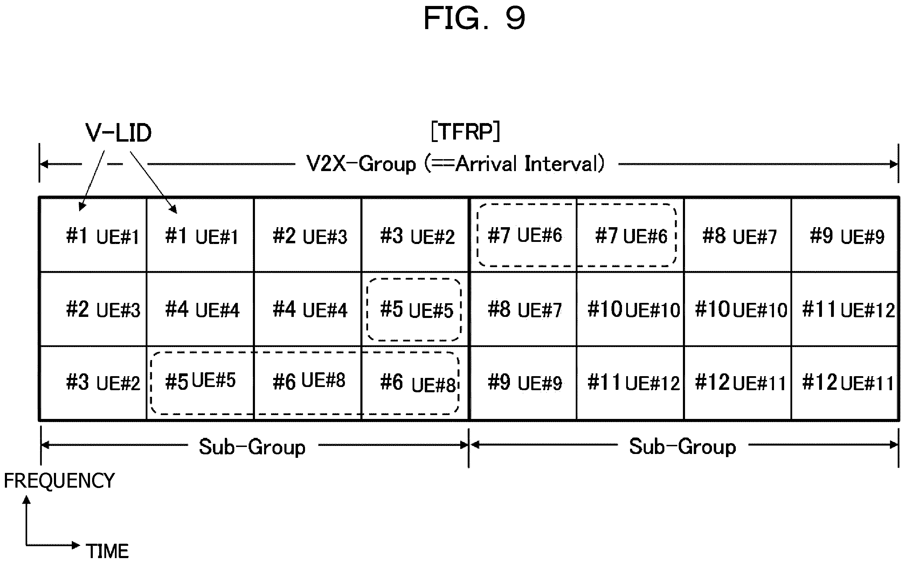

[FIG. 9] FIG. 9 is a diagram illustrating an example of the resource allocation;

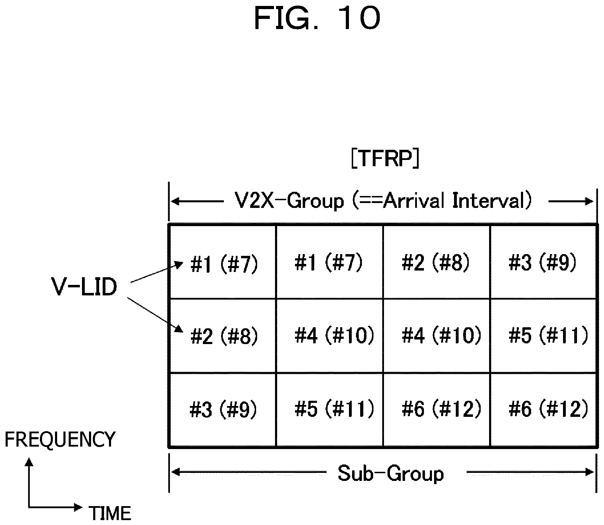

[FIG. 10] FIG. 10 is a diagram illustrating an example of a relationship between each resource in a TFRP and the V-LIDs;

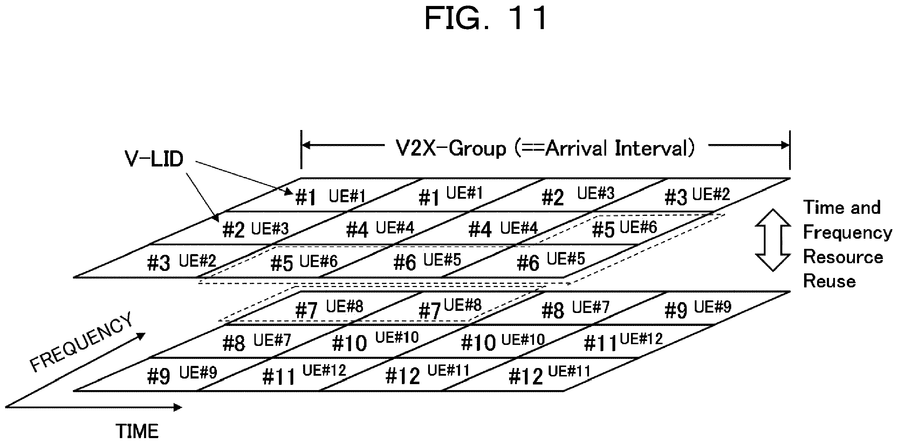

[FIG. 11] FIG. 11 is a diagram illustrating an example of the resource allocation;

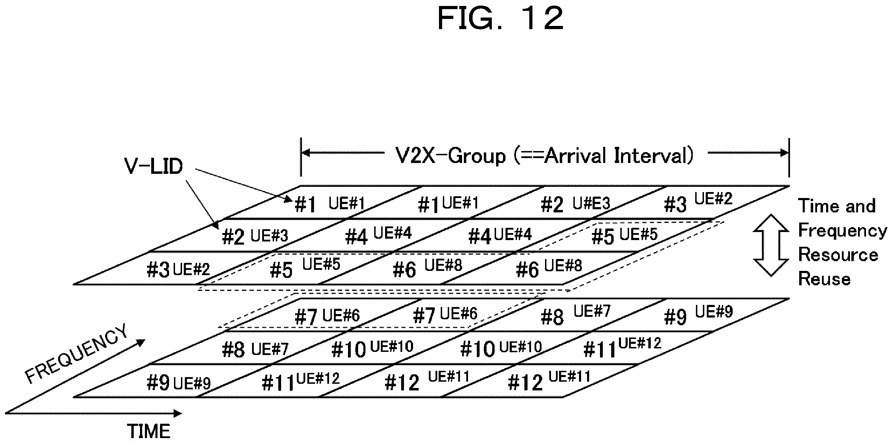

[FIG. 12] FIG. 12 is a diagram illustrating an example of the resource allocation;

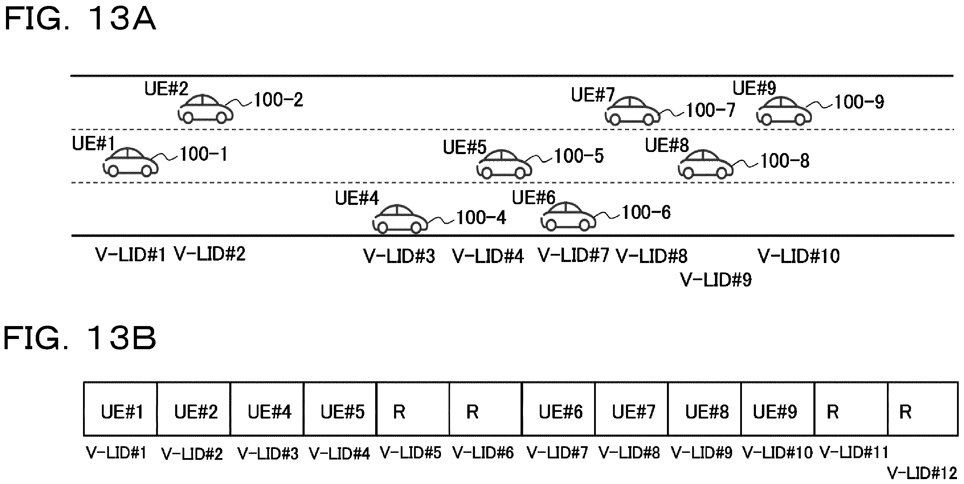

[FIG. 13] FIG. 13A is a diagram illustrating a positional relationship of the terminal devices, and FIG. 13B is a diagram illustrating an example of the V-LID allocation;

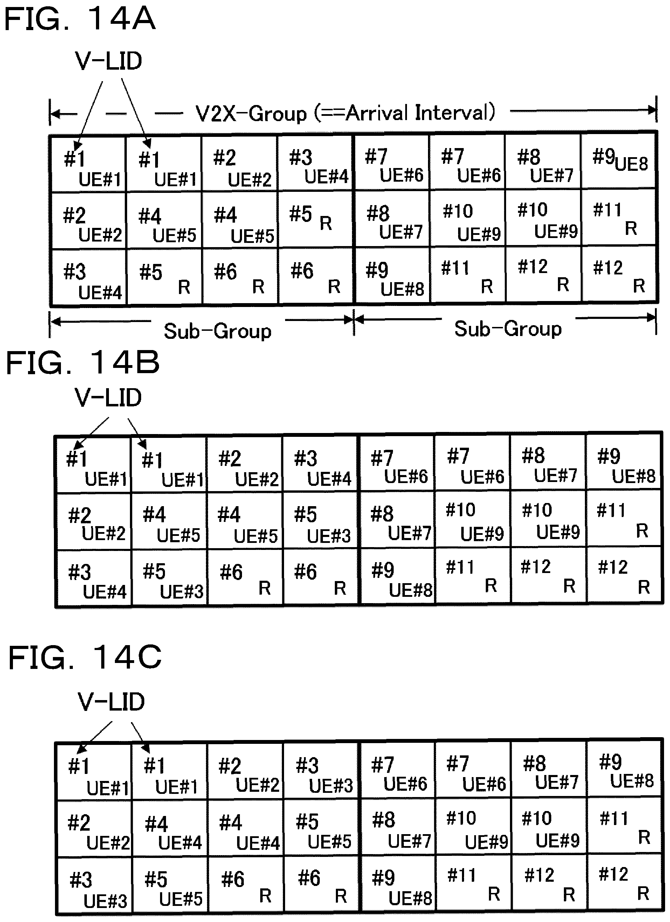

[FIG. 14] FIGs. 14A to 14C are diagrams illustrating examples of the resource allocation;

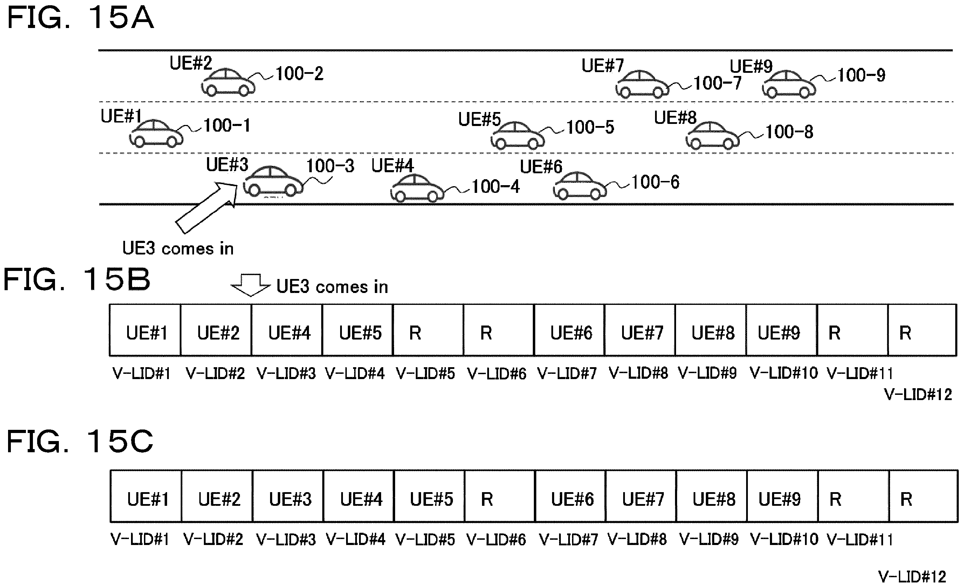

[FIG. 15] FIG. 15A is a diagram illustrating a positional relationship of the terminal devices, and FIGs. 15B and 15C are diagrams illustrating examples of the V-LID allocation;

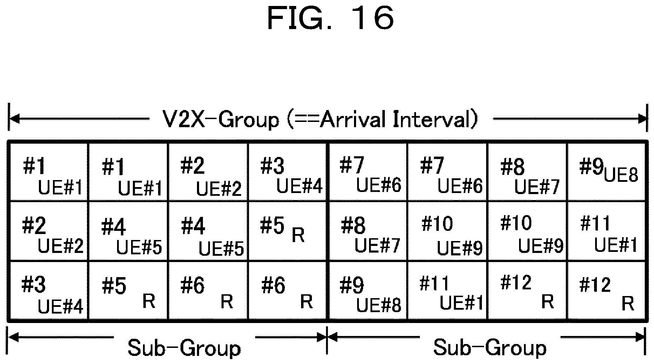

[FIG. 16] FIG. 16 is a diagram illustrating an example of the resource allocation;

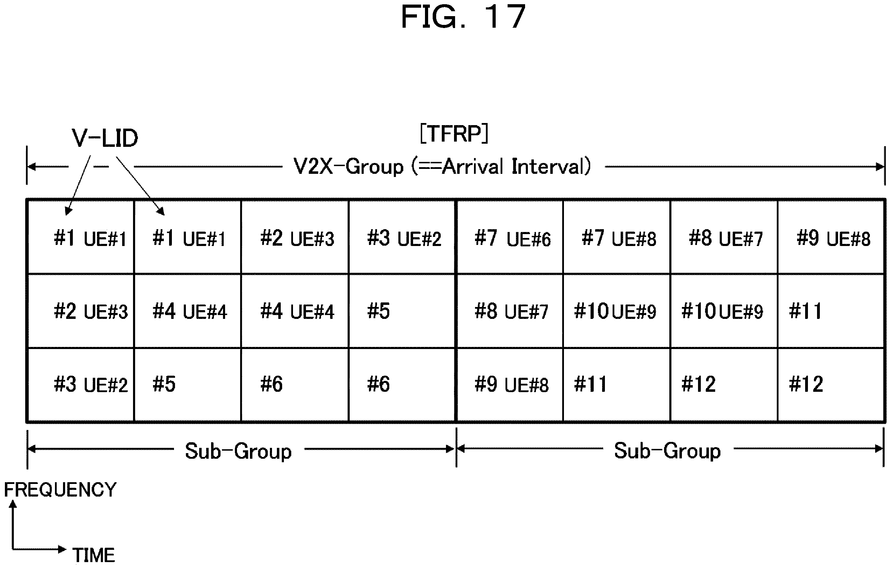

[FIG. 17] FIG. 17 is a diagram illustrating an example of the resource allocation;

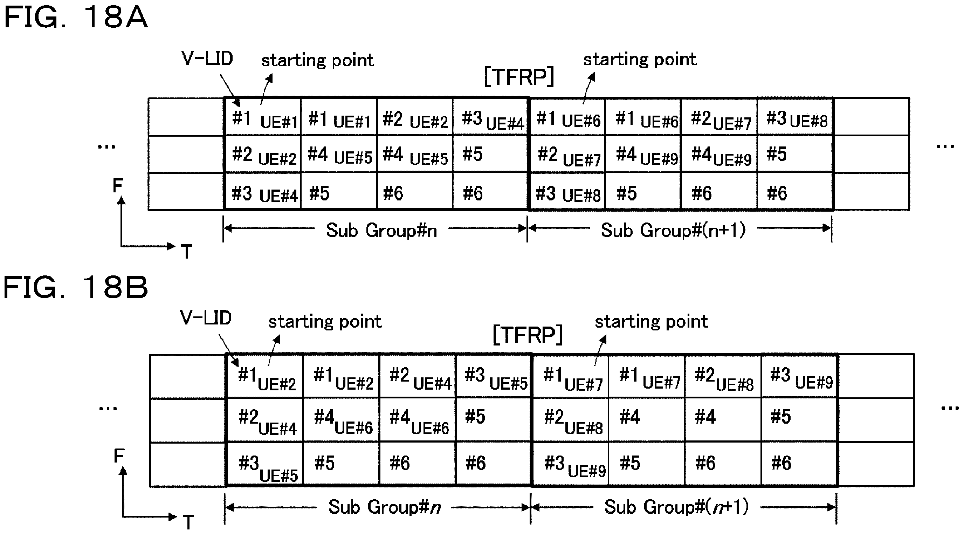

[FIG. 18] FIGs. 18A and 18B are diagrams illustrating examples of the resource allocation;

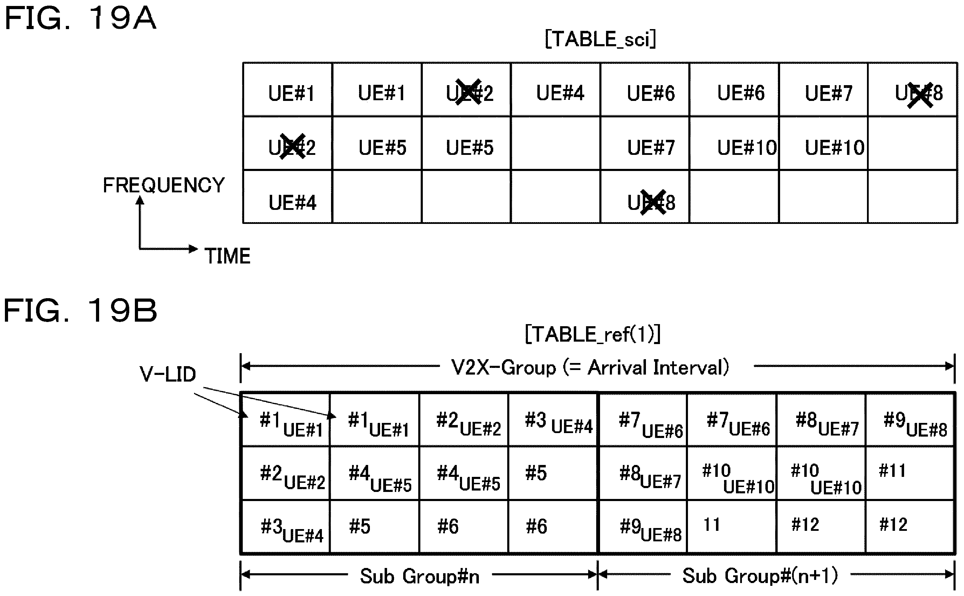

[FIG. 19] FIG. 19A is a diagram illustrating an example of an SCI mapping table,

FIG. 19B is a diagram illustrating an example of a reference mapping table;

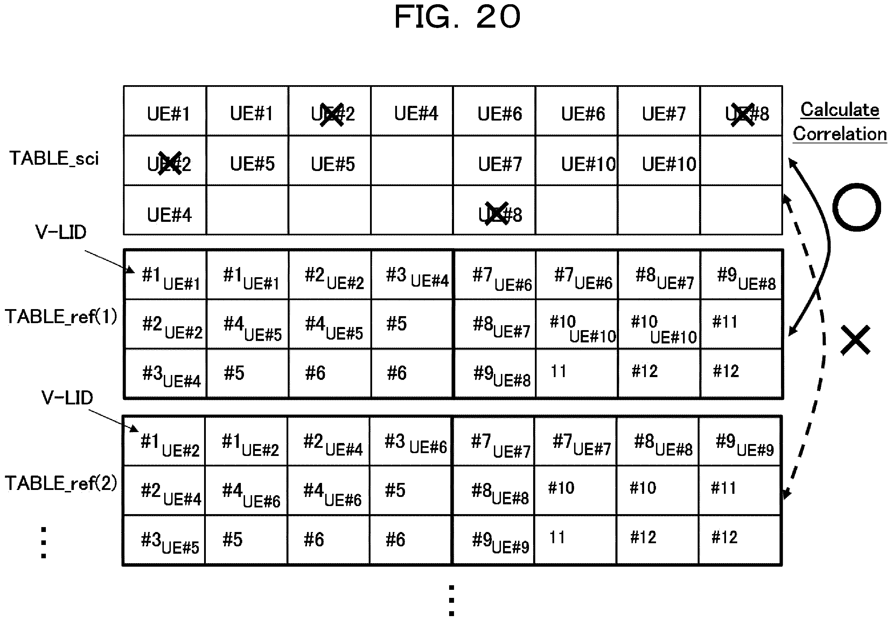

[FIG. 20] FIG. 20 is a diagram illustrating an example of a correlation relationship; and

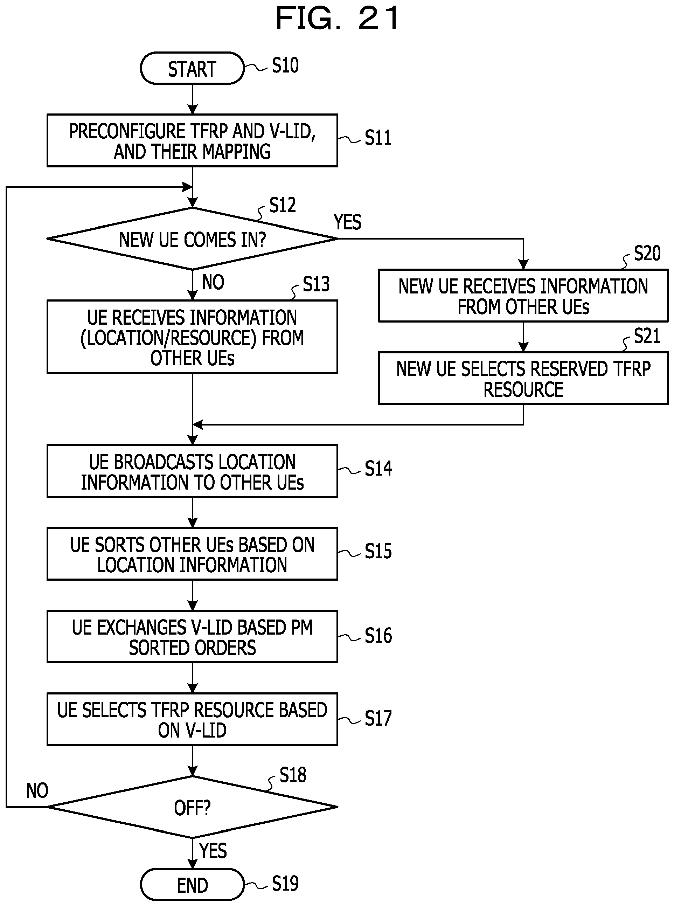

[FIG. 21] FIG. 21 is a flowchart illustrating an operation example.

[Description of Embodiments]

Hereinafter, the present embodiment will be described in detail with reference to the accompanying drawings. Problems and embodiments in the present specification are merely examples, and do not limit the scope of rights of the present application. For example, as long as the described expressions are technologically equivalent even if different described expressions are used, the technologies of the present application may be applied and the scope of rights is not limited thereby. Then, each of the embodiments can be appropriately combined within a range without causing contradiction between individual processing.

Furthermore, it is also permissible if, as the used terms and the described technical contents in the present specification, terms and technical contents described in specifications and contributions as standards related to communication such as 3GPP are appropriately used. Such specifications include, for example, 3GPP TS 38.211 V15.2.0 (2018-06) or the like.

Note that the 3GPP specifications are updated as needed. Therefore, as the specifications described above, the latest specification at the time of filing the present application may be used. Then, the terms and the technical contents described in the latest specification may be appropriately used herein.

Hereinafter, examples of a terminal device, a communication system, and a communication method disclosed in the present application will be described in detail with reference to the drawings. Note that the following embodiments do not limit the disclosed technology.

[First Embodiment]

<1. Exemplary Configuration of Communication System>

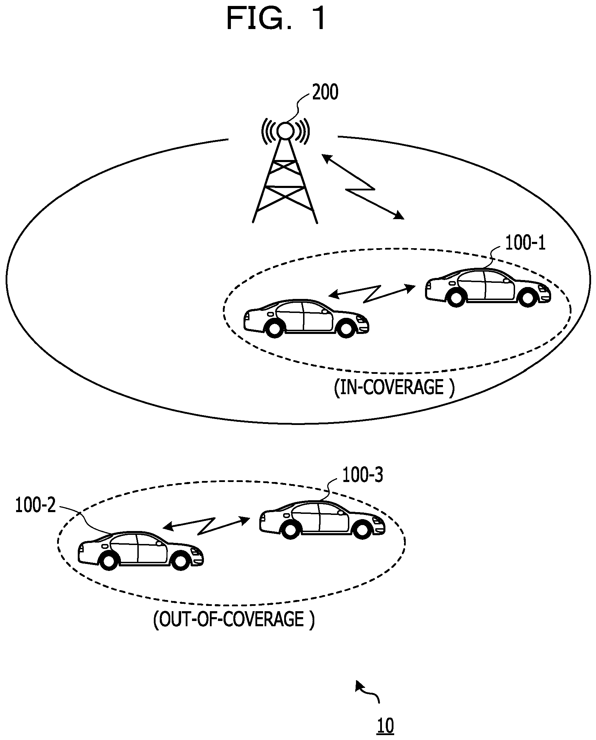

FIG. 1 is a diagram illustrating an exemplary configuration of a communication system 10 according to a first embodiment.

The communication system 10 includes a plurality of terminal devices (hereinafter, may be referred to as "terminal") 100-1 to 100-3. Each of the terminals 100-1 to 100-3 is, for example, provided in each vehicle.

The terminals 100-1 to 100-3 are communication devices that can perform wireless communication, for example, future phones, smartphones, personal computers, tablet terminals, game machines, or the like.

Furthermore, the terminals 100-1 to 100-3 can communicate with each other, for example. The terminals 100-1 to 100-3 can mutually transmit/receive data with each other without performing wireless communication with a base station device (hereinafter, may be referred to as "base station") 200. Alternatively, the terminals 100-1 to 100-3 can autonomously control wireless communication even if the terminals 100-1 to 100-3 are not in a coverage of the communication system 10. V2X communication is an example of such terminal-to-terminal communication. As described above, for example, the V2X is a general term for V2V, V2P, V2I, V2N, or the like. Therefore, for example, in a case where the terminal 100-2 is provided in a vehicle in FIG. 1, the terminal 100-3 that is one of communication partners may be held by a pedestrian, not in the vehicle or may be provided in a sign. However, in the following, description will be made while assuming that the terminals 100-1 to 100-3 be provided in the vehicles. Alternatively, there is a case where description will be made without distinguishing the terminals 100-1 to 100-3 and the vehicles from each other.

In particular, the terminals 100-1 to 100-3 according to the first embodiment are, for example, communication devices that support a mode 2 (In-coverage) of the NR-V2X and a mode 2(c) (Out-of-coverage) of the NR-V2X. In other words, the terminals 100-1 to 100-3 are communication devices that can determine a transmission resource with no scheduling by a base station 200, for example, in a sidelink resource set by the base station 200 or a network or a preset sidelink resource.

Note that, as illustrated in FIG. 1, each of the terminals 100-1 to 100-3 can communicate with other terminals within the coverage range (In-coverage) of the base station 200 and can communicate with other terminals out of the coverage range (Out-of-coverage) of the base station 200. However, in the following, a case will be mainly described in which the terminals 100-1 to 100-3 perform communication out of the coverage range.

Furthermore, when transmitting data or the like, it is not possible for the terminals 100-1 to 100-3 to receive data transmitted from the other terminals or the like, and when receiving data or the like from the other terminals, it is not possible for the terminals 100-1 to 100-3 to transmit data or the like to the other terminals. In other words, the terminals 100-1 to 100-3 are terminals that cannot be set to a reception mode when the terminals 100-1 to 100-3 are in a transmission mode and that cannot be set to the transmission mode when the terminals 100-1 to 100-3 are in the reception mode. There is a case where such terminals 100-1 to 100-3 are referred to as, for example, Half-duplex (mode) terminals.

Moreover, the communication system 10 may further include the base station 200. The base station 200 is, for example, a communication device that can provide various services such as a calling service or a Web browsing service to the terminal 100-1 in a service providable range.

Moreover, in the first embodiment, when the terminal-to-terminal communication is performed, a control channel or a data channel specified by a NR may be used. However, in the following, there is a case where PSCCH specified by V2X communication is described an example of the control channel and PSSCH specified by V2X communication is described as an example of the data channel.

Note that, in the example in FIG. 1, an example is illustrated in which the communication system 10 includes the three terminals 100-1 to 100-3. The number of terminals 100-1 to 100-3 included in the communication system 10 may be two or equal to or more than four.

In the following, unless otherwise noted, there is a case where each of the terminals 100-1 to 100-3 is referred to as a terminal 100.

<2. Exemplary Configuration of Terminal Device>

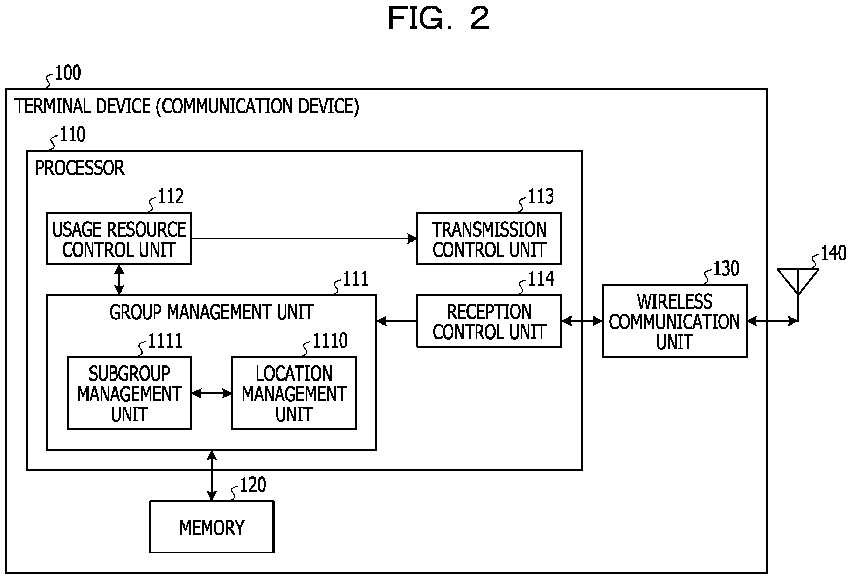

FIG. 2 is a diagram illustrating an exemplary configuration of the terminal 100.

The terminal 100 includes a processor 110, a memory 120, a wireless communication unit 130, and an antenna 140.

The processor 110 is, for example, a Central Processing Unit (CPU), a Digital Signal Processor (DSP), a Field Programmable Gate Array (FPGA), or the like, and controls the entire terminal 100. The processor 110 includes a group management unit 111, a usage resource control unit 112, a transmission control unit 113, and a reception control unit 114.

The group management unit 111 manages a group to which the terminal 100 belongs. Specifically, for example, the group management unit 111 controls admission and withdrawal of the terminal 100 to the group and manages identification information and a usage resource of the terminal 100 belonging to the same group. Note that there is a case where the group managed by the group management unit 111 is, for example, referred to as a V2X group.

The group management unit 111 includes a location management unit 1110 and a subgroup management unit 1111.

The location management unit 1110 manages a location of the terminal 100. Specifically, for example, the location management unit 1110 acquires geographic information of the terminal 100 using the Global Navigation Satellite System (GNSS). An example of the geographic information is location information. The Global Positioning System (GPS) is an example of the GNSS. Therefore, the location management unit 1110 may acquire the location information using the GPS. Therefore, the location management unit 1110 can acquire the geographic information, for example, by receiving a signal transmitted from a communication satellite via the reception control unit 114 or the like. The location management unit 1110 outputs the acquired geographic information to the subgroup management unit 1111. Furthermore, the location management unit 1110 outputs the acquired geographic information to the usage resource control unit 112 and instructs the usage resource control unit 112 to transmit the geographic information (including geographic information update timing information or geographic information use start time).

In the following, it is assumed that the geographic information include timing information when the geographic information is updated (or geographic information use start time).

Furthermore, the location management unit 1110 receives geographic information of other terminal 100 transmitted from the other terminal 100 via the reception control unit 114 or the like. The location management unit 1110 outputs the acquired geographic information to the subgroup management unit 1111.

Note that, in the following, there is a case where the geographic information and the location information are used without distinguishing these pieces of information from each other.

The subgroup management unit 1111 manages a subgroup to which the terminal 100 belongs. Specifically, for example, the subgroup management unit 1111 controls admission and withdrawal of the terminal 100 to a subgroup and manages a resource of the terminal 100 belonging to the same subgroup.

Note that the subgroup managed by the subgroup management unit 1111 is, for example, a subgroup included in the V2X group. In other words, the subgroup management unit 1111 determines the number of subgroups included in the V2X group, for example, on the basis of the number of terminals, the number of subchannels (or the number of resources) included in the frequency axis direction, or the like and sequentially allocates the terminals 100 including the own terminal to the respective subgroups. Then, the subgroup management unit 1111, for example, manages the resources of the terminal 100 included in the subgroup and allocates the resources of the control channel (PSCCH) and the data channel (PSSCH) to the terminal 100 included in the subgroup.

Note that, in the following, there is a case where the resource of the control channel, the resource of the data channel, and the like used for transmission are referred to as a transmission resource or simply referred to as a resource. Furthermore, there is a case where the transmission resource and the resource are used without distinguishing them from each other.

In the first embodiment, the subgroup management unit 1111 manages a Virtual UE Location Index (V-LID). The V-LID is, for example, virtual identification information and represents a relative and geographical location of the terminal 100 in the group. Furthermore, for example, the V-LID represents such a geographical location and also represents a location of a resource included in a predetermined resource pattern.

FIG. 7 illustrates an example of a resource pattern. In the following, there is a case where such a resource pattern is referred to as a Time-Frequency Resource Pattern (TFRP). As illustrated in FIG. 7, a V-LID is allocated to each resource of the TFRP. In the first embodiment, the subgroup management unit 1111, for example, uses the V-LID to select a transmission resource from the resources included in the TFRP according to the location information acquired from the other terminal 100. The subgroup management unit 1111 may be, for example, a selection unit (or determination unit) that selects (or determines) a transmission resource. Details of the V-LID, the TFRP, or the like will be described later.

Returning to FIG. 2, when allocating each resource to each terminal 100 included in the subgroup, the subgroup management unit 1111 generates a SCI, further generates a control signal including the SCI, and outputs the generated control signal to the usage resource control unit 112. The SCI includes, for example, information regarding the resource allocated to each terminal 100.

The usage resource control unit 112 controls a resource used for transmission of the control signal or transmission of data by the terminal 100. Specifically, the usage resource control unit 112 controls the resource of the control channel and the resource of the data channel according to an allocation result included in the control signal output from the subgroup management unit 1111. At this time, the usage resource control unit 112 controls a resource for transmission of the location information acquired by the own terminal in response to an instruction from the location management unit 1110. The resource in this case may be, for example, the resource of the control channel or the resource of the data channel.

The transmission control unit 113 controls the wireless communication unit 130 so as to transmit the control signal and the data using the resource controlled by the usage resource control unit 112. Specifically, the transmission control unit 113 executes the following processing.

In other words, the transmission control unit 113 receives data from an application processing unit or the like in the processor 110 and executes error correction encoding processing (hereinafter, may be referred to as "encoding processing") and modulation processing, for example, on the received data. Furthermore, the transmission control unit 113 executes the encoding processing and the modulation processing, for example, on the control signal received from the subgroup management unit 1111 via the usage resource control unit 112. For example, the transmission control unit 113 maps the control signal to resource of the PSCCH and maps the data to resource of the PSSCH according to the instruction from the usage resource control unit 112. At this time, the transmission control unit 113 performs mapping on the location information and each resource of the PSCCH or the PSSCH. Then, the transmission control unit 113 transmits a transmission signal obtained through mapping via the wireless communication unit 130 by multicast (or groupcast), broadcast, or unicast.

The reception control unit 114 performs demodulation processing and error correction decoding processing (hereinafter, may be referred to as "decoding processing"), for example, on a reception signal received from the other terminal 100. Specifically, the reception control unit 114 extracts (or reproduces) a control signal by performing the demodulation processing, the decoding processing, or the like on the reception signal mapped to the PSCCH. Furthermore, the reception control unit 114 extracts (or reproduces) data by performing the demodulation processing, the decoding processing, or the like on a reception signal mapped to the PSSCH. The reception control unit 114 outputs the extracted control signal and data to the subgroup management unit 1111, the application processing unit in the processor 110, or the like. The extracted control signal or data includes, for example, location information of the other terminal or information regarding a resource used by the other terminal transmitted from the other terminal.

For example, the reception control unit 114 and the location management unit 1110 may be acquisition units that acquire the location information transmitted from the other terminal.

The memory 120 is, for example, a Read Only Memory (ROM), a Random Access Memory (RAM), or the like. The memory 120, for example, stores a program, and the processor 110 reads and executes the program. By this execution, for example, the terminal 100 can achieve functions of the group management unit 111, the usage resource control unit 112, the transmission control unit 113, and the reception control unit 114. Alternatively, by this execution, for example, the terminal 100 can achieve functions of the location management unit 1110 and the subgroup management unit 1111. The processor 110 corresponds to, for example, the group management unit 111, the usage resource control unit 112, the transmission control unit 113, the reception control unit 114, the location management unit 1110, and the subgroup management unit 1111.

Furthermore, the memory 120 stores, for example, information used when the processor 110 executes processing, or the like.

The wireless communication unit 130 executes Digital to Analog (D/A) conversion processing and frequency conversion processing (up-conversion) to a wireless band, for example, on a transmission signal output from the transmission control unit 113. The wireless communication unit 130 outputs a wireless signal converted into the wireless band to the antenna 140.

Furthermore, the wireless communication unit 130 performs frequency conversion processing (down-conversion) to a baseband band, Analog to Digital (A/D) conversion processing, or the like on the wireless signal output from the antenna 140 and converts the wireless signal into a reception signal. The wireless communication unit 130 outputs the reception signal to the reception control unit 114.

The antenna 140 transmits the wireless signal output from the wireless communication unit 130 to the other terminal 100. Furthermore, the antenna 140 receives a wireless signal transmitted from the other terminal 100 and outputs the received wireless signal to the reception control unit 114.

<3. About TFRP>

Next, an example of the TFRP used in the first embodiment will be described. FIG. 3 is a diagram illustrating an example of a TFRP.

In FIG. 3, the horizontal axis indicates a time axis direction, and the vertical axis indicates a frequency axis direction. As illustrated in FIG. 3, N resources as many as the subchannels are provided in the frequency axis direction. Furthermore, in the time axis direction, $N_T$ ($N_T$ is integer equal to or more than two) resources of which the number corresponds to the number of subchannels in the frequency axis direction are provided. Therefore, the number of resources in FIG. 3 is $N \times N_T$. However, the example in FIG. 3 illustrates an example of $N_T = N + 1$. In the following, the example of $N_T = N + 1$ will be described.

In FIG. 3, each of v1 to v ($N \times (N + 1)/2$) (N represents, for example, the number of subchannels in frequency axis direction and indicates integer of one or more) indicates a resource (or subchannel) that can be allocated to each terminal 100. For example, the resource v1 is a resource that can be allocated to the terminal 100-1, and the resource v2 is a resource that can be allocated to the terminal 100-2.

Furthermore, in FIG. 3, the number of each of the resources v1 to v ($N \times (N + 1)/2$) such as the resource v1 or the resource v2 is two, for example, because the resource used for initial transmission and a resource used for repetition are included. For example, the terminal 100-1 transmits data or the like using the resource v1 for initial transmission and retransmits data or the like using the resource v1 for repetition.

The TFRP has, for example, the following pattern. In other words, as illustrated in FIG. 3, N resources, from the first to the N-th resources in the frequency axis direction, which are first resources in the time axis direction can be respectively allocated to N terminals 100 as the resources for initial transmission. Furthermore, N resources, from the second to the (N + 1)-th resources in the time axis direction, which are first resources in the frequency axis direction can be respectively allocated to the same N terminals as the resources for repetition.

Furthermore, (N - 1) resources, from the second to the N-th resources in the frequency axis direction, which are the second resources in the time axis direction can be respectively allocated to the other (N - 1) terminals 100 different from the N terminals described above. Moreover, (N - 1) resources, from the third to the (N + 1)-th resources in the time axis direction, which are the second resources in the frequency axis direction can be respectively allocated to the other (N - 1) terminals 100 different from the N terminals described above.

Moreover, (N - 2) resources, from the third to the N-th resources in the frequency axis direction, which are the third resources in the time axis direction are resources that can be respectively allocated to other (N - 2) terminals 100 different from the N and (N - 1) terminals described above. Moreover, (N -2) resources, from the fourth to the (N + 1)-th resources in the time axis direction, which are the third resources in the frequency axis direction are resources that can be respectively allocated to other (N - 2) terminals 100 different from the N and (N - 1) terminals described above.

After that, this is repeatedly applied to the remaining resources. Then, finally, an N-th single resource in the frequency axis direction which is the N-th resource in the time axis direction can be allocated to a (($N \times (N + 1)/2$)-th terminal. Furthermore, an (N + 1)-th single resource in the time axis direction which is the N-th resource in the frequency axis direction can be allocated to a (($N \times (N + 1)/2$)-th terminal.

Here, each of the N resources, from the first to the N-th resources in the frequency axis direction, which is the first resource in the time axis direction is a resource for initial transmission, and the N resources, from the second to the (N + 1)-th resources in the time axis direction, which are the first resources in the frequency axis direction are the resources for repetition.

Furthermore, the (N - 1) resources, from the second to the N-th resources in the frequency axis direction, which are the second resources in the time axis direction are the resources for initial transmission. Furthermore, the (N - 1) resources, from the third to the (N + 1)-th resources in the time axis direction, which are the second resources in the frequency axis direction are the resources for repetition.

Moreover, the (N - 2) resources, from the third to the N-th resources in the frequency axis direction, which are the third resources in the time axis direction are the resources for initial transmission. Furthermore, the (N - 2) resources, from the fourth to the (N + 1)-th resources in the time axis direction, which are the third resources in the frequency axis direction are the resources for repetition.

Moreover, an N-th single resource in the frequency axis direction which is the N-th resource in the time axis direction is the resource for initial transmission, and an (N + 1)-th single resource in the time axis direction which is the N-th resource in the frequency axis direction is the resource for repetition.

FIG. 4 is a diagram illustrating an example of a TFRP in a case of the number of subchannels N = 3. In this case, the resources v1 to v6 can be allocated to six terminals 100-1 to 100-6.

For example, in FIG. 4, the terminal 100-1 can transmit a control signal (or data) using a resource which is the first resource in the frequency axis direction and is the first resource in the time axis direction. Furthermore, the terminal 100-1 can retransmit the control signal (or data) using a resource which is the first resource in the frequency axis direction and is the second resource in the time axis direction.

Here, for example, a case will be considered where the resources v1 to v6 are respectively allocated to the terminals 100-1 to 100-6 in FIG. 4. In this case, the terminal 100-1 can transmit a control signal (or data) using the resource v1 which is the first resource in the frequency axis direction and is the first resource in the time axis direction. Furthermore, the terminal 100-1 can retransmit the control signal (or data) using the resource v1 which is the first resource in the frequency axis direction and is the second resource in the time axis direction.

Then, in FIG. 4, at the first timing, the terminals 100-1 to 100-3 perform transmission, and the terminals 100-4 to 100-6 can perform reception. Furthermore, at the next timing, the terminals 100-1, 100-4, and 100-5 perform transmission, and the terminals 100-2, 100-3, and 100-6 can perform reception. For example, focusing on the terminal 100-6, reception can be performed at the first timing and the next timing, transmission can be performed at the third timing and the fourth timing. Focusing on the terminal 100-5, reception can be performed at the first timing and the third timing, and transmission can be performed at the second timing and the fourth timing.

Each terminal 100 is a Half-Duplex terminal and is not able to perform transmission and reception at the same time. With the TFRPs illustrated in FIGs. 3 and 4, it is possible to ensure that all users receive the transmitted packets at least once in a predetermined period. Furthermore, by setting the number of opportunities for transmitting control signal or data to twice within the predetermined period, for example, it is possible to increase a possibility for receiving the data transmitted from the transmission-side terminal by the reception-side terminal 100 in comparison with a case where the number of transmission opportunities is once.

The example of the TFRP used in the first embodiment has been described above. In the first embodiment, the terminal 100 selects each resource of the TFRP using the V-LID. Hereinafter, details of the V-LID will be described below.

<4. V-LID>

As described above, the V-LID represents, for example, a relative location corresponding to the geographic information. Furthermore, the V-LID represents, for example, a location of each resource in the TFRP. Therefore, details of the V-LID will be described using two cases including <4.1 A Case of Representing Location Corresponding to Geographic Information> and <4.2 A Case of Representing Location of Each Resource in TFRP>.

<4.1 A Case of Representing Location Corresponding to Geographic Information >

FIG. 5 is a diagram illustrating an exemplary configuration of the communication system 10 and an example of a positional relationship between the terminals 100-1 to 100-8.

In FIG. 5, the left in the drawing indicates the west, the right indicates the east, the top indicates the north, and the bottom indicates the south. As illustrated in FIG. 5, the terminals 100-1 to 100-8 travel on a road within a certain range. A traveling direction is, for example, from the west to the east (left to right).

In the first embodiment, the terminal 100 allocates V-LIDs to the own terminal and the other terminals in a predetermined order according to the location of each terminal 100. In the example in FIG. 5, the order is an order (ascending order) for allocating smaller indexes are sequentially allocated from the terminals 100-1 to 100-3 positioned on the west to the east direction. In this case, when the plurality of terminals 100-1 to 100-3, 100-6, and 100-7 is positioned at the same location, the indexes are allocated from the north to the south in an ascending order.

Therefore, in the example in FIG. 5, the terminal 100 allocates (n - 4) (hereinafter, may be referred to as V-LID# (n - 4)) to the terminal 100-1 as a V-LID and (n - 3) (hereinafter, may be referred to as V-LID# (n - 3)) to the terminal 100-2 as a V-LID. Thereafter, the terminal 100 allocates a V-LID# (n - 2) to the terminal 100-3, V-LID# (n - 1) to the terminal 100-5, a V-LID#n to the terminal 100-4, a V-LID# (n + 1) to the terminal 100-6, a V-LID# (n + 2) to the terminal 100-7, and a V-LID# (N + 3) to the terminal 100-8.

Note that, in the example described above, an example has been described in which the traveling direction of the vehicle is from the west to the east. However, the traveling direction may be from the east to the west. Even in the latter case, for example, the V-LIDs according to the locations of the respective terminals 100 are allocated in the order illustrated in FIG. 5.

FIG. 6(A) is a diagram illustrating an example of a positional relationship between terminals 100-1 to 100-11. In FIG. 6(A), the left in the drawing indicates the west, the right indicates the east, the top indicates the north, and the bottom indicates the south. The V-LIDs are allocated to the respective terminals 100-1 to 100-11 in the order illustrated in FIG. 5.

In other words, a V-LID#1 is allocated to the terminal 100-1, a V-LID#2 is allocated to the terminal 100-3, a V-LID#3 is allocated to the terminal 100-2, a V-LID#4 is allocated to the terminal 100-4, a V-LID#5 is allocated to the terminal 100-6, a V-LID#7 is allocated to the terminal 100-8, or the like.

FIG. 6B is a diagram illustrating an example of a correspondence relationship between the V-LIDs and the terminals 100-1 to 100-11. Note that, in FIG. 6B, the terminal 100-1 is represented as a UE#1, the terminal 100-2 is represented as a UE#2,..., and the terminal 100-12 is represented as a UE#12. As illustrated in FIG. 6B, to each of the terminals 100-1 to 100-12, a V-LID according to the location of the terminal is allocated.

Such allocation of the V-LIDs is performed, for example, by each of the terminals 100-1 to 100-12. For example, focusing on the terminal 100-1, when the terminal 100-1 acquires location information of the own terminal, the terminal 100-1 broadcasts the location information of the own terminal periodically or aperiodically. Each of the other terminals 100-2 to 100-12 also broadcasts the location information thereof. The terminal 100-1 acquires the location information of the other terminals 100-2 to 100-12 that has been broadcasted in this way so as to acquire the positional relationships between all the terminals 100-1 to 100-12 in the group including the own terminal. This similarly applies to the other terminals 100-2 to 100-12. Therefore, if all the terminals 100-1 to 100-12 are within a certain distance from each other, all the terminals 100-1 to 100-12 can share the location information of each of the terminals 100-1 to 100-12. Therefore, it is possible for all the terminals 100-1 to 100-12 to share the same positional relationship using these pieces of location information.

Note that, as described above, each of the terminals 100-1 to 100-12 may transmit the location information, for example, using the PSSCH or the PSCCH. Alternatively, each of the terminals 100-1 to 100-12 may transmit the location information using a dedicated channel.

<4.2 A Case of Representing Location of Each Resource in TFRP>

FIG. 7 is a diagram illustrating an example of a relationship between a V-LID and each resource location of the TFRP. Note that, in FIG. 7, the horizontal axis indicates a time axis direction, and the vertical axis indicates a frequency axis direction. Furthermore, an example is illustrated in which a case where the number of subchannels is N = 3 and two subgroups are included in a single V2X group.

In the example in FIG. 7, a V-LID#1 indicates a resource that is the first resource in the frequency axis direction and is the first resource in the time axis direction and a resource that is the first resource in the frequency axis direction and the second resource in the time axis direction. Furthermore, a V-LID#2 indicates a location of each of a resource that is the second resource in the frequency axis direction and is the first resource in the time axis direction and a resource that is the first resource in the frequency axis direction and the third resource in the time axis direction. Other V-LID#3 to V-LID#12 are also allocated to the locations of the resources illustrated in FIG. 3.

In other words, a pattern in which the V-LID is allocated to each resource in the TFRP is similar to, for example, the allocation of the v1 to the v $((N \times (N + 1)/2)$ to the respective resources described with reference to FIG. 3. Specifically, for example, the pattern is as follows.

In other words, to each of the N resources that are the first resources in the time axis direction and are the first to the N-th resources in the frequency axis direction, V-LIDs are allocated in an ascending order. Furthermore, to each of the N resources that are the first resources in the frequency axis direction and are the second to the (N + 1)-th resources in the time axis direction, the same V-LIDs are allocated in an ascending order.

Furthermore, to each of the (N - 1) resources that are second resources in the time axis direction and are the second to the N-th resources in the frequency axis direction, the V-LIDs are allocated in order from a V-LID having a number subsequent to the allocated V-LID described above. Moreover, to each of the (N - 1) resources that are the second resources in the frequency axis direction and are the third to the (N + 1)-th resources in the time axis direction, the same V-LIDs are respectively and sequentially allocated from the V-LID having the subsequent number described above. After that, this is repeatedly applied to the remaining resources. Then, finally, to a single resource that is the N-th resource in the time axis direction and is the N-th resource in the frequency axis direction, $((N \times (N + 1)/2)$ is allocated as a V-LID. Furthermore, to a single resource that is the N-th resource in the frequency axis direction and is the (N + 1)-th resource in the time axis direction, the same $((N \times (N + 1)/2)$ is allocated as a V-LID.

For example, in the examples in FIGs. 6A and 6B, when the V-LID#1 is allocated to the terminal 100-1 (or UE#1) based on the location information, the resource to which the V-LID#1 is allocated is allocated in the TFRP.

Furthermore, when the V-LID#3 is allocated to the terminal 100-2 (or UE#2), the resource to which the V-LID#3 is allocated is allocated in the TFRP. After that, similarly, when each V-LID is allocated to each of the terminals 100-3 to 100-12, the resource to which each V-LID is allocated is allocated in the TFRP.

In this way, because the V-LID represents the location of each resource in the TFRP, when the terminal 100 allocates the V-LID according to the location of each terminal 100, it is possible to automatically determine which resource is used in the TFRP.

<4.3 Summary regarding V-LID>

The V-LID is summarized as follows, for example.

In other words, as described above, for example, the V-LID represents the relative and the geographical location of the terminal 100. Furthermore, the V-LID represents, for example, a location of a resource included in the TFRP.

For example, the V-LID is not changed until being updated. Furthermore, depending on a geographic information update timing, accuracy is improved by updating the V-LID and the geographic information at the same time. For example, the terminal 100 broadcasts the location information acquired by the own terminal periodically or aperiodically. Therefore, the terminal 100 acquires location information transmitted from other terminal and may update a V-LID according to the geographic information update timing. Therefore, there is a case where the terminal 100 updates the V-LID periodically or aperiodically.

An algorithm used to determine the V-LID is, for example, as follows. In other words, 1) Each terminal 100 broadcasts the geographic information and the geographic information update timing information to other terminal. The geographic information may be, for example, location information acquired with the GNSS. 2) Each terminal 100 updates the geographic information according to the geographic information update timing and sorts (sort) terminals in a predetermined order on the basis of the geographic information. 3) Each terminal 100 re-sorts the terminals based on the geographic information updated according to the geographic information update timing from a certain terminal. 4) Each terminal reselects a resource from the TFRP on the basis of the new order.

These details will be described in an operation example.

Next, as a specific example, a case where a V-LID is updated according to a location change of a vehicle (or terminal 100) (<5. A Case Where Location of Vehicle Changes>) will be described. Furthermore, as a specific example, a case where a V-LID is updated by changing the number of vehicles (or the number of terminals) (<6. A Case Where The Number of Vehicles (the number of terminals) Changes>) will be described. Both cases are cases where the V-LID is updated, and for example, correspond to 3) and 4) described above.

<5. A Case Where Location of Vehicle Changes>

For example, there is a case where the location of the vehicle changes over time. FIG. 8A is a diagram illustrating an example of a case where a location of the terminal 100-6 (or UE#6) is moved from a location between the terminal 100-4 and the terminal 100-5 (FIG. 6A) to a location between the terminal 100-8 and the terminal 100-7.

In this case, the location of the terminal 100-6 changes in a V2X group or a subgroup. Therefore, the V-LID is also changed. Note that, in FIG. 8A, regarding the allocation of the V-LIDs according to the geographic information, for example, as illustrated in FIG. 5, V-LIDs are allocated from the west to the east in an ascending order.

Before the change, for example, as illustrated in FIG. 6B, the V-LID#5 is allocated to the terminal 100-6, the V-LID#6 is allocated to the terminal 100-5, and the V-LID#7 is allocated to the terminal 100-8.

After the change, for example, as illustrated in FIG. 8B, the V-LID#5 is allocated to the terminal 100-5, the V-LID#6 is allocated to the terminal 100-8, the V-LID#7 is allocated to the terminal 100-6.

The allocation of the V-LID#5 to the V-LID#7 is changed according to the change in the location of the terminal 100-6, and other V-LIDs do not change. Therefore, as indicated by a dotted line, the V-LID#5 to the V-LID#7 are affected by the change in the V-LID.

For example, regarding allocation of the resources before the change, as illustrated in FIG. 7, resources are allocated in which the V-LID#5 is allocated to the terminal 100-6 (UE#6), the V-LID#6 is allocated to the terminal 100-5 (UE#5), and the V-LID#7 is allocated to the terminal 100-8 (UE#8).

FIG. 9 is a diagram illustrating a resource allocation example according to the TFRP after the change. As illustrated in FIG. 9, after the change, resources are allocated in which the V-LID#5 is allocated to the terminal 100-5 (UE#5), the V-LID#6 is allocated to the terminal 100-8 (UE#8), and the V-LID#7 is allocated to the terminal 100-6 (UE#6). Compared with FIG. 7 before the change, the resource indicated by the dotted line in FIG. 9 is changed according to the change in the location of the terminal 100-6.

In this way, the movement of the terminal 100-6 changes the location information of the terminal 100-6, this change changes the V-LIDs of all the terminals 100-1 to 100-12, and allocation resources in the TFRP also change.

Note that, in the example in FIG. 8A, an example has been described in which the terminal 100-6 moves. However, the same applies to a case where the other terminals 100-1 to 100-5 and 100-7 to 100-12 move. Regardless of whether the terminal 100 moves or the other terminal 100 moves, when the positional relationship changes according to the change in the location information of at least one of the terminal 100 and the other terminal 100, the V-LID changes according to the above change, and the allocation resource also changes.

The examples in FIGs. 7 and 9 have described an example in which a V2X group includes two subgroups.

For example, there is a case where only one subgroup is included in a V2G group. FIG. 10 is a diagram illustrating an example of a relationship between V-LIDs and each resource in the TFRP in such a case.

As illustrated in FIG. 10, a resource allocated to the V-LID#1 can be used for the V-LID#7. Furthermore, a resource allocated to the V-LID#2 can be used for the V-LID#8. Similarly, a resource allocated to the V-LID#6 can be used for the V-LID# 12.

FIGs. 11 and 12 are examples of resource allocation according to the TFRP. FIGs. 11 and 12 illustrate an example of a case where the positional relationship of the terminals 100 changes from FIG. 6A to FIG. 8A. FIG. 11 corresponds to FIG. 6A before change, and FIG. 12 corresponds to FIG. 8A after change.

However, FIG. 11 is an example in which the TFRP is illustrated as separating the TFRP into a group from the V-LID#1 to the V-LID#6 in FIG. 10 and a group from the V-LID#7 to the V-LID#12, and the actual positional relationship is the same as that in FIG. 10.

The V-LID#1 is allocated to the terminal 100-1 according to the positional relationship. Furthermore, the V-LID#1 is allocated to a resource that is the first resource in the frequency axis direction and the first resource in the time axis direction and a resource that is the first resource in the frequency axis direction and the second resource in the time axis direction in the TFRP.

Furthermore, the V-LID#7 is allocated to the same resources, and the resource is allocated to the terminal 100-8 (UE#8) to which the V-LID#7 is allocated.

In this case, the same resources are allocated to the terminal 100-1 and the terminal 100-8. Similarly, the same resources (V-LID#3 and V-LID#9) are allocated to the terminal 100-2 and the terminal 100-9, and the same resources (V-LID#2 and V-LID#8) are allocated to the terminal 100-3 and the terminal 100-7.

However, for example, as illustrated in FIGs. 6(A) and 8(A), a distance between the terminals 100-1 and 100-8 is equal to or more than a certain distance. Similarly, a distance between the terminals 100-2 and 100-9 and a distance between the terminals 100-3 and 100-7 are equal to or more than a certain distance. Due to the distance, even when the terminals 100-1 and 100-8 use the same resource, data transmitted from the terminal 100-1 does not reach the terminal 100-8, and data transmitted from the terminal 100-8 also does not reach the terminal 100-1. Therefore, data (or packet data) collision occurs. However, the collision does not affect demodulation. Similarly, although data collisions occur between the terminals 100-2 and 100-9 and the terminals 100-3 and 100-7, this does not affect the demodulation. That is, it is considered that the terminal 100-8 does not belong to the group of the terminal 100-1.

In a case where the V2X group forms a single subgroup, there is a case where the resources in the TFRP cannot be allocated to all the terminals 100. For example, with the TFRP in FIG. 4, it is possible to allocate the resources to all of the six terminals 100. However, it is not possible to allocate the resources to seven or more terminals. However, as illustrated in FIGs. 10 and 11, even when the same resources are used, it is possible to allocate the resource to each terminal so as not to affect the data collision depending on the distance between the terminals 100. By allocating the V-LID to each resource of the TFRP as illustrated in FIGs. 10 and 11, even in a case where only one subgroup is formed in the V2X group, it is possible to effectively use the resources, and in addition, it is possible to avoid data collision.

Note that, in FIG. 11, a resource indicated by a dotted line represents a resource to be changed, and in FIG. 12, a resource indicated by a dotted line represents a resource of which a terminal to be allocated is changed due to the movement of the terminal 100-6.

<6. A Case Where The Number of Vehicles (the number of terminals) Changes>

In the above-described example, an example has been described in which the number of vehicles (or the number of terminals. Hereinafter, there is a case where the number of vehicles and the number of terminals are used without distinguishing the numbers from each other) included in the V2X group or the subgroup is a constant number. In actual, for example, there is a case where a new vehicle comes in a V2G group.

Therefore, in the first embodiment, a resource for reserve is provided in the TFRP. For example, the terminal 100 allocates a resource for reserve to a new vehicle. Details will be described below.

Note that, in the following, as described above, there is a case where a vehicle and a terminal are used without distinguishing the vehicle and the terminal from each other. Furthermore, there is a case where a V2X group and a subgroup are not distinguished from each other and are collectively referred to as a group.

FIG. 13A is a diagram illustrating an example of a positional relationship of a vehicle before the terminal 100 comes in a group. In FIG. 13A, as in FIG. 5, the left in the drawing indicates the west, the right indicates the east, the top indicates the north, and the bottom indicates the south.

For allocation of a V-LID according to the location of the vehicle, for example, as in FIG. 5, an ascending allocation order of the V-LIDs from the west to the east is used.

FIG. 13B is a diagram illustrating an example of a relationship between the terminals 100-1 and 100-2 and 100-4 to 100-9 and the V-LIDs in a case where the L-VIDs are allocated in such an allocation order. Furthermore, FIG. 14A is a diagram illustrating an example of a TFRP in a case where the V-LIDs are allocated in this manner. Note that, as illustrated in FIG. 14A, the terminals 100-1 and 100-2 and 100-4 to 100-9 belonging to the V2X group are classified into two subgroups.

As illustrated in FIG. 14A, resources to which the V-LID#5 and the V-LID#6 and the V-LID#11 and the V-LID#12 are allocated are resources for reserve. The resource for reserve is not used as resource allocation to the terminals 100-1 and 100-2 and 100-4 to 100-9, and resources other than the resource for reserve are used.

Therefore, the terminal 100 allocates the V-LID#4 to the terminal 100-5 and allocates the next V-LID#7 to the terminal 100-6 without allocating the V-LID#5 and the V-LID#6 that are resources for reserve to the terminal 100-6.

FIG. 15A is a diagram illustrating an example of a positional relationship between vehicles in a case where the terminal 100-3 travels on a road and comes in the group thereafter. FIG. 15A illustrates an example in which the terminal 100-3 (UE#3) enters between the terminal 100-2 (UE#2) and the terminal 100-4 (UE#4).

The fact that the terminal 100-3 newly comes in the group to which the other terminals 100-1 and 100-2 and 100-4 to 100-9 belong is, for example, that the terminal 100-3 enters a range in which the terminal 100-3 can communicate with any one of the other terminals 100-1 and 100-2 and 100-4 to 100-9. As a result, the number of terminals of the group belonging to the other terminals 100-1 and 100-2 and 100-4 to 100-9 changes by the entry of the terminal 100-3.

Each of the terminals 100-1 and 100-2 and 100-4 to 100-9 other than the terminal 100-3 that has entered broadcasts (notify) location information acquired by the own terminal and the V-LID allocated by the own terminal, for example, periodically or aperiodically. Therefore, each of the terminals 100-1 and 100-2 and 100-4 to 100-9 can acquire the location information acquired by the other terminal.

When entering a range where the terminal 100-3 can receive signals transmitted from the other terminals 100-1 and 100-2 and 100-4 to 100-9, the terminal 100-3 that has newly come in the V2X group can acquire the location information transmitted from these terminals 100-1 and 100-2 and 100-4 to 100-9.

The terminal 100-3 that has acquired the location information of the other terminals 100-1 and 100-2 and 100-4 to 100-9 temporarily selects a resource for reserve from among resources of the TFRP. For example, as illustrated in FIGs. 14B and 15B, the terminal 100-3 selects a resource to which the V-LID#5 is allocated as a resource for reserve. It is assumed that which V-LID is allocated as a resource for reserve be shared by all the terminals 100-1 to 100-9.

Then, the terminal 100-3 broadcasts the location information obtained by the own terminal periodically or aperiodically using the resource for reserve (for example, V-LID#5) that has been temporarily selected. At this time, the terminal 100-3 transmits, for example, the V-LID (for example, V-LID#5) used as the selected resource for reserve. The terminal 100-3 may transmit the selected V-LID using, for example, the PSCCH, the PSSCH, or the dedicated channel.

The other terminals 100-1 and 100-2 and 100-4 to 100-9 acquire the location information of the terminal 100-3 that has newly come in the group and the V-LID used as the resource for reserve. Then, the other terminals 100-1 and 100-2 and 100-4 to 100-9 allocate the V-LIDs based on the location information of the terminal 100-3 and the V-LID for reserve that has been temporarily selected by the terminal 100-3. For example, as in FIG. 5, the other terminals 100-1 and 100-2 and 100-4 to 100-9 allocate the V-LIDs in an ascending allocation order of the V-LIDs from the west to the east. At this time, the other terminals 100-1 and 100-2 and 100-4 to 100-9 allocate the V-LIDs including the V-LID for reserve that has been temporarily selected by the terminal 100-3.

In this case, the other terminals 100-1 and 100-2 and 100-4 to 100-9 allocate the V-LID#3 to the terminal 100-3, the V-LID#4 to the terminal 100-4, and the V-LID#5 to the terminal 100-5 on the basis of the location information of the terminal 100-3. Other V-LIDs are the same as those before the change.

Furthermore, because the terminal 100-3 also acquires the location information from the other terminals 100-1 and 100-2 and 100-4 to 100-9, the terminal 100-3 allocates the V-LIDs same as those described above from the positional relationship similarly to the other terminals 100-1 and 100-2 and 100-4 to 100-9.

FIG. 15C is a diagram illustrating a correspondence relationship between the updated V-LIDs after the terminal 100-3 has entered and the terminals 100-1 to 100-9. Furthermore, FIG. 14C is a diagram illustrating an example of the updated TFRP.

As illustrated in FIG. 14C, the terminal 100-3 (UE#3) is allocated to the resource to which the V-LID#3 is allocated. Furthermore, the terminal 100-4 (UE#4) is allocated to the resource to which the V-LID#4 is allocated. Moreover, the terminal 100-5 (UE#5) is allocated to the resource to which the V-LID#5 is allocated. The resource for the reserve to which the V-LID#5 has been allocated is used as a transmission resource of the terminal 100-5 after the update.

For example, this resource for reserve may be used for the terminal 100 that transmits larger packet data.

FIG. 16 is a diagram illustrating an example in which a resource for reserve is used as a resource for transmission of the terminal 100-1. In FIG. 16, as in FIG. 14A, the resources to which the V-LID#5 and V-LID#6 and the V-LID#11 and the V-LID#12 are allocated are used as resources for reserve. Then, in the example in FIG. 16, the resource for reserve to which the V-LID#11 is allocated is used as the transmission resource of the terminal 100-1.

The terminal 100-1 transmits, for example, packet data having a larger amount of information than the other terminals 100-2 to 100-9. Therefore, the terminal 100-1 transmits the packet data using two resources including a resource to which the V-LID#1 is allocated and a resource to which the V-LID#11 is allocated. Because the terminal 100-1 uses more resources than the other terminals 100-2 to 100-9, it is possible to transmit the packet data having a larger amount of information using these resources.

For example, when allocating the V-LIDs according to the location information of the own terminal and the other terminals, the terminal 100-1 selects the resource for reserve from the TFRP. Then, for example, the terminal 100-1 broadcasts the V-LID (for example, V-LID#11) allocated to the selected resource for reserve to the other terminal 100.

Note that, in the example described above, an example has been described in which, in a case of using the V-LID that has been allocated as the resource for reserve, the terminal 100-3 that has newly come in the group transmits the V-LID to the other terminal. For example, the terminal 100-3 does not need to transmit such a V-LID. In this case, for example, the terminal 100-3 may transmit information regarding the resource for reserve to be used (for example, information regarding frequency and time indicating the resource) as SCI. The other terminals 100-1 and 100-2 and 100-3 to 100-12 receive the SCI transmitted from the terminal 100-3 and grasp the resource used by the terminal 100-3 from the SCI so as to grasp that the resource for reserve is used. As a result, the other terminals 100-1 and 100-2 and 100-3 to 100-12 can allocate V-LIDs including a V-LID to which a resource for reserve is allocated.

Furthermore, in a case where the resource for reserve is selected for data transmission, it is not needed for the terminal 100-1 that transmits packet data having a large amount of information to transmit a V-LID corresponding to the resource. In this case, the terminal 100-1 may transmit the information regarding the resource for reserve to be used with the SCI.

<7. Summary about TFRP>

Here, regarding each resource of the TFRP, two resources are defined as follows.

The first resource is a Mandatory resource (or compulsory resource or required resource). The Madatory resources are, for example, resources having the same resource size and resources that are dynamically dedicated and/or (pre) configured to the terminal 100.

FIG. 17 is a diagram illustrating an example of a TFRP. In the example in FIG. 17, resources to which the V-LID#1 to V-LID#4 and V-LID#7 to V-LID#10 are allocated are Madatory resources. These resources may be, for example, resources allocated according to the location information of the terminal 100.

The second resource is an Optional resource (or option resource or selected resource). The Optional resources are, for example, resources that correspond to the resource for reserve described above and that are reserved (reserve) for the terminal 100 and have the same or different sizes. The Optional resource is a resource that is used, for example, in a case where the terminal 100 initializes mapping of the TFRP or transmits packet data having a larger size. In the example in FIG. 17, for example, resources to which the V-LID#5, V-LID#6, V-LID#11, and V-LID#12 are allocated are Optional resources.

For example, the number of resources that are the Optional resources fluctuates depending on the number of resources remaining in each subgroup. For example, in the example described above, a state before the terminal 100-3 comes in the group is FIG. 14A, and a state after the update is FIG. 14C. As illustrated in FIGs. 14A and 14C, the number of Optional resources may fluctuate in the subgroup according to the number of terminals that newly come in the group.

Furthermore, as described with reference to FIGs. 14B, 14C, or the like, the terminal 100 may randomly select the Optional resources. Therefore, each terminal 100 can grasp the randomly selected Optional resources, for example, through sensing. As described above, the terminal 100 can detect the SCI through sensing and grasp which Optional resource is used by the other terminal according to the SCI. As a result, for example, it is possible to avoid a situation where the plurality of terminals 100 selects the same Optional resource, and it is possible to avoid data collisions.

<8. Correlation based on TFRP mapping>

For example, in FIG. 15A, focusing on the terminal 100-1, the terminal 100-1 can acquire the location information of the own terminal with the GNSS. Furthermore, the terminal 100 can acquire the location information of each of the terminals 100-2 to 100-9 from the other terminals 100-2 to 100-9.

However, there is a case where it is not possible for the terminal 100 to grasp, from the location information, whether or not the terminal 100-1 belongs to the same V2X group or subgroup (hereinafter, may be referred to as "group") as the other terminals 100-2 to 100-9.

For example, there is a case where the terminal 100-1 is a terminal that belongs to the same group as the terminal that exists on the west side. Alternatively, the group to which the terminal 100-1 belongs is the same group to which the terminal on further west side and the terminals 100-2 to 100-4.

In the example in FIG. 15A or the like, the terminal 100-1 is the westernmost terminal in the group, and therefore, the V-LID#1 is allocated. Then, in the TFRP, a resource on the upper left is allocated to the terminal 100-1.

FIG. 18A is a diagram illustrating an example of the TFRP in such a case. However, the V-LIDs in FIG. 18A correspond to, for example, those in FIG. 13A.

In FIG. 18A, there is a case where a resource that is a first resource in the time axis direction and is a first resource in the frequency axis direction in a TFRP of a subgroup #n is referred to as, for example, a starting point (starting point).

The above is indicated in other words using the starting point as follows, for example. In other words, there is a case where it is not possible to determine from the location information which terminal 100 a resource that is the starting point in each of subgroups #n and #(n + 1) is allocated. Alternatively, there is a case where it is not possible for the terminal 100 to determine which subgroup the terminal 100 belongs to from the location information.

For example, in a case where the terminal 100-2 is positioned on the most west side in the subgroup #n, as illustrated in FIG. 18B, the terminal 100-2 is allocated to the resource that is the starting point of the subgroup #n. In this case, a resource of a previous subgroup #(n - 1) may be allocated to the terminal 100-1.

Note that, in the example in FIG. 18A, in the subgroup #n, the resource that is the starting point is allocated to the terminal 100-1, and in the subgroup #(n + 1), the resource that is the starting point is allocated to the terminal 100-6. Furthermore, in the example in FIG. 18B, in the subgroup #n, the resource that is the starting point is allocated to the terminal 100-2, and in the subgroup #(n + 1), the resource that is the starting point is allocated to the terminal 100-7.

Therefore, in the first embodiment, the subgroup to which the terminal 100 belongs is determined using two mapping tables, and mapping on the TFRP is performed.

The first mapping table is a SCI mapping table (TABLE_sci). FIG. 19A is a diagram illustrating an example of the SCI mapping table (TABLE_sci). The SCI mapping table (TABLE_sci) is a table that detects a resource used by each terminal for communication by sensing the SCI (or resource information) transmitted from the terminal 100, for example. In other words, the SCI mapping table (TABLE_sci) is, for example, a table representing a resource used by each terminal 100 for communication.

For example, the terminal 100 extracts information regarding a resource used by the other terminal, specifically, information regarding a frequency and a time from the SCI and writes the extracted frequency and time in corresponding regions of the frequency and the time of the SCI mapping table (TABLE_sci). FIG. 19A illustrates an example in which identification information of the other terminal 100-1 is written in the upper left region of the SCI mapping table (TABLE_sci).

Similarly, the terminal 100 writes information regarding resources used by the other terminals 100-2 to 100-10 in corresponding regions on the basis of the SCI transmitted from the other terminals 100-2 to 100-10. Note that, in the example in FIGs. 19 and 19B, an example is illustrated in which it is not possible for the terminal 100 to detect the SCI of the terminals 100-2 and 100-8. In this way, even in a case where it is not possible to write the identification information of some terminals in the corresponding region in the SCI mapping table (TABLE_sci), the processing can be executed.

The second mapping table is a reference mapping table (TABLE_ref). FIG. 19B is a diagram illustrating an example of the reference mapping table (TABLE_ref).

The reference mapping table (TABLE_ref) is, for example, a mapping table representing a relationship between a V-LID (or TFRP) and a UE-Identification (ID). The reference mapping table includes, for example, information regarding a terminal that is a starting point in each subgroup.

The example in FIG. 19B illustrates an example of a reference mapping table (TABLE_ref(1)). The reference mapping table (TABLE_ref(1)) is a table that includes two subgroups #n and #(n + 1) and is a table in which the resource that is the starting point is allocated to the terminal 100-1 in the subgroup #n and the resource that is the starting point is allocated to the terminal 100-6 in the subgroup #(n + 1).

As described above, there are various patterns of the terminals 100 to which the resources that are the starting points are allocated. Therefore, the reference mapping tables (TABLE_ref) include all patterns of reference mapping tables.

FIG. 19B illustrates one (TABLE_ref(1)) of such reference mapping tables (TABLE_ref). In addition, there may be a reference mapping table (TABLE_ref(2)) in which the resource that is the starting point is allocated to the terminal 100-2 in the subgroup #n and the resource that is the starting point is allocated to the terminal 100-7 in the subgroup #(n + 1). Moreover, there may be a reference mapping table (TABLE_ref(3)) in which the resource that is the starting point is allocated to the terminal 100-4 in the subgroup #n and the resource that is the starting point is allocated to the terminal 100-8 in the subgroup #(n + 1). The reference mapping tables (TABLE_ref(1), TABLE_ref(2),...) including all starting patterns of terminals 100 that can be allocated to the resources included in the TFRP are included in the reference mapping table (TABLE_ref). The reference mapping table (TABLE_ref) is, for example, a table that represents all correspondence relationships between each resource (or V-LID) to the terminal 100 (or UE-ID) in the TFRP.

It is needed to update the reference mapping table (TABLE_ref) according to update of geographic information. So to speak, when the V-LID is updated, the reference mapping table (TABLE_ref) is automatically updated.

The terminal 100 detects a reference mapping table that has the highest correlation with the SCI mapping table (TABLE_sci) from among the reference mapping tables (TABLE_ref(1), TABLE_ref(2),...) held by the own terminal. Then, the terminal 100 grasps which subgroup the terminal 100 belongs to using the reference mapping table (TABLE_ref) detected in that manner, allocates the V-LID on the basis of the location information in the subgroup, and performs resource mapping on the TFRP on the basis of the allocated V-LID.

FIG. 20 is a diagram illustrating an example of a correlation result. As illustrated in FIG. 20, the first reference mapping table (TABLE_ref(1)) of the reference mapping tables (TABLE_ref) has the highest correlation with the SCI mapping table (TABLE_sci). In this case, the terminal 100 allocates the V-LID and allocates the TFRP resources using the reference mapping table (TABLE_ref(1)).

It is sufficient that the correlation between the SCI mapping table (TABLE_sci) and the reference mapping table (TABLE_ref) be calculated, for example, as follows.

In other words, the number of terminals belonging to the group around the terminal 100 to be a target is set to K, and the number of resources included in the single TFRP is set to LK. The number of resources is LK because a single terminal performs initial transmission once and repeatedly performs retransmission (L - 1) times. Here, an index k of each resource included in the TFRP corresponds to the ID (UE-ID) of the terminal 100 and can be expressed as $UE_{ID}$ (k). Note that, $1 \leq k \leq LK$ is satisfied. The correlation is calculated, for example, using the following formula (1).

[Formula 1]

$$f_m(k) = \begin{cases} 1 & if\ UE_{ID}(k)\ in\ TABLE\_sci\ =\ UE_{ID}(k)\ in\ TABLE\_ref(m) \\ 0 & else \end{cases} \cdots\ (1)$$

Here, it is assumed that "M" be the number of tables included in the reference mapping table (TABLE_ref). In this case, $1 \leq m \leq M$ is satisfied. However, m represents an index of the reference mapping table (TABLE_ref(1), TABLE_ref(2),...).

Then, the terminal 100 detects a reference mapping table (TABLE_ref(m)), of which an index is m, having the highest correlation using the following formula (2).

[Formula 2]

$$m = arg\ max_{1 \leq m \leq M}\ \sum_{k=1}^{LK} f_m(k) \cdots\ (2)$$

Note that, in order to reduce the number M of tables of the reference mapping table (TABLE_ref) used for calculation, for example, the terminal 100 should check the SCI mapping table (TABLE_sci) before the calculation using the formula (1).

For example, because the terminal 100-1 is detected on the upper left of the SCI mapping table (TABLE_sci) illustrated in FIG. 20, the terminal 100 uses a reference mapping table in which the terminal 100-1 exists at the starting point among the reference mapping tables (TABLE_ref) for correlation calculation.

For example, it is sufficient that the terminal 100 perform calculation as follows. In other words, the memory 120 stores all patterns of reference mapping tables (TABLE_ref). The subgroup management unit 1111 calculates the detected SCI mapping table (TABLE_sci) and each reference mapping table (TABLE_ref(1), TABLE_ref(2),...) read from the memory 120 in each resource unit using the formula (1). Then, the reference mapping table (TABLE_ref(m)) that satisfies the formula (2) is calculated. It is sufficient that the subgroup management unit 1111 read the formulas (1) and (2) stored in the memory 120 from the memory 120 so as to perform these calculations.

<9. Operation Example>

FIG. 21 is a flowchart illustrating an operation example of resource allocation processing.

When starting processing (S10), the terminal 100 determines a TFRP and a V-LID in advance and maps the TFRP and the V-LID (S11). For example, the terminal 100 performs the following processing.

In other words, the subgroup management unit 1111 reads the TFRP stored in the memory 120. The TFRP is, for example, the TFRP illustrated in FIG. 3. Then, the subgroup management unit 1111 allocates the V-LID to each resource of the TFRP. The example of the TFRP allocated in that manner is, for example, FIG. 10. Each resource of such a TFRP may include an Optional resource in advance.

Next, the terminal 100 determines whether or not a new terminal comes in a group (S12).

When the new terminal does not come in the group (No in S12), the terminal 100 receives location information and resource information from the other terminal (S13). For example, the terminal 100 executes the following processing.

In other words, the location management unit 1110 receives the location information transmitted from the other terminal via the reception control unit 114 or the like. The location management unit 1110 outputs the received location information to the subgroup management unit 1111. Furthermore, the location management unit 1110 acquires location information of the own terminal using the GSNN and outputs the acquired location information to the subgroup management unit 1111. Moreover, the subgroup management unit 1111 receives SCI transmitted from the other terminal 100 via the reception control unit 114 or the like and extracts resource information used by the other terminal from the received SCI.

Next, the terminal 100 broadcasts the location information of the own terminal to the other terminal (S14). For example, the location management unit 1110 outputs the location information acquired using the GSNN to the usage resource control unit 112 and instructs the usage resource control unit 112 to broadcast the location information. Upon receiving this instruction, the usage resource control unit 112 instructs the transmission control unit 113 to transmit the location information using resources of the PSCCH or the PSSCH, and the transmission control unit 113 transmits the location information to the wireless communication unit 130 or the like using the instructed resource.

Next, the terminal 100 classifies the other terminals based on the location information (S15). For example, the subgroup management unit 1111 rearranges the terminals 100 in a predetermined order on the basis of the location information of the other terminals and the own terminal. For example, as illustrated in FIG. 5, the subgroup management unit 1111 rearranges the terminals 100 in an order from the west to the east and rearranges the terminals 100 in an order from the north to the south in a case where the plurality of terminals 100 exists at the same location.

Returning to FIG. 21, next, the terminal 100 allocates the V-LIDs on the basis of the classified order (S16). For example, as illustrated in FIG. 5, the subgroup management unit 1111 allocates the V-LIDs in an order in which the V-LIDs are allocated in an ascending order from the west to the east, and allocates the V-LIDs in an order in which the V-LIDs are allocated in an ascending order from the north to the south in a case where the plurality of terminals 100 exists at the same location. In this way, an example in which the V-LID is allocated to each terminal 100 on the basis of the location information is, for example, FIG. 6(B).

Returning to FIG. 21, next, the terminal 100 selects each resource of the TFRP on the basis of the V-LID (S17). For example, the terminal 100 executes the following processing.

In other words, the subgroup management unit 1111 allocates each resource of the TFRP predetermined in S11 to each terminal 100 on the basis of the V-LIDs allocated in S16. In this way, an example in which each resource of the TFRP is allocated to each terminal 100 is, for example, FIG. 7. Furthermore, when an Optional resource is included, the subgroup management unit 1111 selects each resource of the TFRP with respect to each terminal 100 in consideration of this resource. Moreover, the subgroup management unit 1111 may check the resource used by each terminal 100 in S13 using the SCI mapping table (TABLE_sci) stored in the memory 120. In this case, the subgroup management unit 1111 reads the reference mapping table (TABLE_ref) and the SCI mapping table (TABLE_sci) stored in the memory 120 in this processing (S17) and calculates a correlation. The subgroup management unit 1111 reads the formulas (1) and (2) stored in the memory 120 and calculates the correlation. Then, the subgroup management unit 1111 uses the V-LID allocated to each resource of the TFRP using the reference mapping table (TABLE_ref) having the highest correlation and maps each resource with respect to each terminal 100 so as to select each resource.

Returning to FIG. 21, next, the terminal 100 determines whether or not power is turned OFF (S18). For example, because the subgroup management unit 1111 can receive a signal indicating that the power is turned off from a power supply and may make determination according to whether or not this signal is received.

When the power is turned OFF (Yes in S18), the terminal 100 ends the resource allocation processing (S19).

On the other hand, when the power is not turned OFF (No in S18), the terminal 100 proceeds to S12 and repeats the processing described above.

Furthermore, when a new terminal 100 comes in a group (Yes in S12), the new terminal 100 receives location information and resource information from the other terminal (S20). For example, as illustrated in FIG. 15A, in a case where the terminal 100-3 comes in the group as a new terminal, the terminal 100-3 executes the following processing.

In other words, the location management unit 1110 receives location information transmitted from other terminal in the group and outputs the received location information to the subgroup management unit 1111. Furthermore, the subgroup management unit 1111 receives SCI transmitted from the other terminal in the group and extracts resource information from the SCI. The location information may be transmitted with the PSCCH or the PSSCH.

Next, the new terminal 100 selects a reserved TFRP resource (S21). In other words, the terminal 100 selects a resource using the Optional resource. For example, the terminal 100-3 performs the following processing.

In other words, the subgroup management unit 1111 reads the TFRP from the memory 120 and temporarily selects one Optional resource included in the TFRP. In the example in FIG. 14B, the subgroup management unit 1111 temporarily selects a resource to which the V-LID#5 is allocated from the Optional resource.

Returning to FIG. 21, next, the processing proceeds to S14, and the processing described above is repeated. In this case, all terminals including the new terminal 100 execute, for example, the following processing.

In other words, the new terminal 100 transmits the location information acquired by the own terminal to the other terminal in the group (S14). For example, the location management unit 1110 of the new terminal 100 transmits the location information acquired by the own terminal to the other terminal via the usage resource control unit 112 or the like.

Next, all terminals in the group including the new terminal 100 classify all the terminals (S15). For example, the subgroup management units 1111 of all the terminals arrange all the terminals in an order according to the location information.

Next, all the terminals allocate the V-LIDs to all the terminals according to the location information (S16). For example, the subgroup management units 1111 of all the terminals allocate the V-LIDs to all the terminals in an order according to the location information. An example of resources allocated in this manner is, for example, FIG. 14C.

As described above, in the first embodiment, for example, the terminal 100 allocates the V-LIDs according to the location information and selects the resource from the TFRP on the basis of the V-LIDs. Therefore, for example, because the terminal 100 selects the resource according to the locations of all the terminals, basically, the transmission resource is not shared by the plurality of terminals 100. Therefore, data collision between the terminals does not occur, and the transmission resources are allocated to all the terminals. Therefore, it is possible to efficiency use the transmission resources.

Furthermore, for example, as illustrated in FIGs. 10 to 12, although there is a case where the plurality of terminals 100 shares one resource, the terminals apart from each other by a distance equal to or more than a certain distance share each resource according to the positional relationship of the terminals 100. Therefore, data collision does not occur between the terminals. Furthermore, because the plurality of terminals shares one resource, it is possible to improve a use efficiency of the resources.

Moreover, the terminal 100 creates a SCI mapping table (TABLE_sci) using the SCI and selects a reference mapping table (TABLE_ref) having the highest correlation with the SCI mapping table (TABLE_sci).

Therefore, for example, by specifying the terminal to which the resource that is the starting point is allocated, the terminal 100 can grasp a subgroup to which the own terminal belongs, the allocated V-LID, and which resource can be selected from the TFRP. Therefore, the terminal 100 can select an appropriate resource of the TFRP in the subgroup.

[Other Embodiments]

In FIG. 10, an example in which two V-LIDs are allocated to one resource has been described. For example, three or more V-LIDs may be allocated to one resource. In this case, it is sufficient that each of the distances between the plurality of terminals 100 to which the same resource is allocated be a distance with which a signal transmitted from each terminal 100 does not reach the other terminal.

REFERENCE SIGNS LIST

| 10 | communication system |
|---|---|
| 100 (100-1 to 100-12) | terminal device (terminal) |
| 110 | processor |
| 111 | group management unit |
| 1110 | location management unit |
| 1111 | subgroup management unit |
| 112 | usage resource control unit |
| 113 | transmission control unit |
| 114 | reception control unit |
| 120 | memory |
| 130 | wireless communication unit |
| 140 | antenna |
| 200 | base station device (base station) |

**Claims**

1. A communication device that is able to determine a transmission resource without being scheduled by a base station device, the communication device comprising:

an acquisition unit configured to acquire geographic information of other communication device; and
a selection unit configured to select the transmission resource according to the geographic information.

2. The communication device according to claim 1, wherein
the selection unit selects the transmission resource from among a predetermined resource pattern.

3. The communication device according to claim 2, wherein

the predetermined resource pattern includes $N \times N_T$ transmission resources in total that include N (N is integer equal to or more than one) transmission resources in a frequency axis direction and $N_T$ ($N_T$ is integer equal to or more than two) transmission resources in a time axis direction,
N resources in the frequency axis direction that are first resources in the time axis direction are set as transmission resources for initial transmission to be respectively allocated to the N communication devices, and N resources that are first resources in the frequency axis direction and are a second to $N_T$-th resources in the time axis direction are set as transmission resources for repetition to be allocated to the N communication devices,
(N - 1) resources that are second resources in the time axis direction and are a second to N-th resources in the frequency axis direction are set as transmission resources for initial transmission to be respectively allocated to the (N - 1) communication devices different from the N communication devices, and the (N -1) resources that are second resources in the frequency axis direction and are a third to $N_T$-th resources in the time axis direction are set as transmission resources for repetition to be allocated to the above-described (N - 1) communication devices, and
this is repeated after that, a transmission resource that is the N-th resource in the time axis direction and is the N-th resource in the frequency axis direction is set as a transmission resource for initial transmission to be allocated to a $((N \times N_T)/2)$-th communication device to which a transmission resource is not allocated, and a transmission resource that is the N-th resource in the frequency axis direction and the $N_T$-th resource in the time axis direction is set as a transmission resource for repetition to be allocated to the $((N \times N_T)/2)$-th communication device.

4. The communication device according to claim 1, wherein
the acquisition unit acquires the geographic information of the communication device and a geographic information update timing or use start time information based on a signal transmitted from a communication satellite using the Global Navigation Satellite System (GNSS).

5. The communication device according to claim 4, further comprising:
a transmission unit (112, 113) configured to transmit the geographic information of the communication device using a Physical Sidelink Control CHannel (PSCCH) or a Physical Sidelink Shared CHannel (PSSCH).

6. The communication device according to claim 1, wherein
the acquisition unit receives the geographic information of the other communication device and a geographic information update timing or use start time information using a Physical Sidelink Control CHannel (PSCCH) or a Physical Sidelink Shared CHannel (PSSCH).

7. The communication device according to claim 4, wherein
the selection unit selects the transmission resource according to the geographic information of the other communication device and the geographic information of the communication device.

8. The communication device according to claim 1, wherein
the selection unit allocates Virtual User Equipment Location Indexes (V-LID) to the other communication device and the communication device according to the geographic information and selects the transmission resource on the basis of the V-LIDs.

9. The communication device according to claim 8, wherein

the V-LID is allocated to each resource included in the predetermined resource pattern, and
the selection unit selects the transmission resource by allocating the transmission resource to which the V-LID is allocated to the communication device or the other communication device according to the V-LID allocated to the communication device or the other communication device according to the geographic information.

**10.** The communication device according to claim 8, wherein

regarding each resource included in the predetermined resource pattern,
V-LIDs are allocated to N resources that are first resources in a time axis direction and are a first to N-th resources in a frequency axis direction in an ascending order, and the same V-LIDs are allocated to N resources that are first resources in the frequency axis direction and are a second to $N_T$-th resources in the time axis direction in an ascending order,
V-LIDs are allocated to (N - 1) resources that are second resources in the time axis direction and are a second to N-th resources in the frequency axis direction from a V-LID subsequent to the allocated V-LID in order, and the same V-LIDs are allocated to (N -1) resources that are second resources in the frequency axis direction and are a third to $N_T$-th resources in the time axis direction from the subsequent V-LID in order,
this is repeatedly performed on remaining resources, and
$((N \times N_T)/2)$ is allocated to a single resource that is an N-th resource in the time axis direction and is an N-th resource in the frequency axis direction as a V-LID, and $((N \times N_T)/2)$ is allocated to a single resource that is an N-th resource in the frequency axis direction and is a (N + 1)-th resource in the time axis direction as a V-LID.

**11.** The communication device according to claim 9, wherein
a plurality of V-LIDs is allocated to the each resource.

**12.** The communication device according to claim 8, wherein
the V-LID represents a relative and geographical location of the communication device.

**13.** The communication device according to claim 7, wherein
when the geographic information of the other communication device, the geographic information of the communication device, or a combination thereof changes, the selection unit selects the transmission resource according to the changed geographic information.

**14.** The communication device according to claim 13, wherein
the selection unit allocates Virtual User Equipment Location Indexes (V-LID) to the other communication device and the communication device according to the changed geographic information and selects the transmission resource on the basis of the V-LIDs.

**15.** The communication device according to claim 2, wherein
the predetermined resource pattern includes first resources that have the same resource size and are preset for the communication device and the other communication device and second resources that have the same or different resource sizes and are reserved for the communication device and the other communication device.

**16.** The communication device according to claim 15, further comprising:

a transmission unit, wherein
the selection unit selects the second resource when the communication device enters a range where the communication device is able to communicate with the other communication device that belongs to a predetermined group, and
the transmission unit transmits location information of the communication device using the second resource.

**17.** The communication device according to claim 16, wherein

the acquisition unit acquires the geographic information from the other communication device when the communication device enters the range where the communication device is communicable with the other communication device that belongs to the predetermined group,
the selection unit selects the first or the second resource according to the geographic information of the other communication device and the geographic information of the communication device, and
the transmission unit communicates with the other communication device using the selected first or second resource.

**18.** The communication device according to claim 16, wherein
the acquisition unit acquires the geographic information from the other communication device when the communication device enters the range where the communication device is communicable with the other communication device that belongs to the predetermined group,

the selection unit selects the first or the second resource according to the geographic information of the other communication device and the geographic information of the communication device, and
the transmission unit communicates with the other communication device using the selected first or second resource.

19. The communication device according to claim 16, wherein
the selection unit selects the second resource when the communication device transmits data with a larger amount of information than the other communication device.

20. The communication device according to claim 2, further comprising:

a memory configured to store a plurality of first mapping tables representing all correspondence relationships between each of the transmission resources included in the predetermined resource pattern and the communication device or the other communication device to which each of the transmission resources is allocated, wherein
the acquisition unit acquires resource information used by the other communication device from the other communication device, and
the selection unit detects the first mapping table with the highest correlation with a second mapping table that represents a result of detecting a resource that is used by the other communication device for communication on the basis of the resource information from among the plurality of first mapping tables and selects the transmission resource using the detected first mapping table.

21. A communication system that includes a first and second communication devices that are able to determine a transmission resource without being scheduled by a base station device, wherein

the first communication device includes
a transmission unit that transmits geographic information of the first communication device, and
the second communication device includes:

an acquisition unit that acquires the geographic information of the first communication device, and
a selection unit that selects the transmission resource according to the geographic information.

22. A communication method of a communication device that includes an acquisition unit and a selection unit and is able to determine a transmission resource without being scheduled by a base station device, the communication method comprising:

acquiring geographic information of other communication device by the acquisition unit; and
selecting the transmission resource according to the geographic information by the selection unit.

# FIG. 1

(IN-COVERAGE)

(OUT-OF-COVERAGE)

# FIG. 2

TERMINAL DEVICE (COMMUNICATION DEVICE) ~100

PROCESSOR ~110

USAGE RESOURCE CONTROL UNIT ~112

TRANSMISSION CONTROL UNIT ~113

GROUP MANAGEMENT UNIT ~111

RECEPTION CONTROL UNIT ~114

SUBGROUP MANAGEMENT UNIT ~1111

LOCATION MANAGEMENT UNIT ~1110

WIRELESS COMMUNICATION UNIT ~130

~140

MEMORY ~120

EP 3 911 057 A1

# FIG. 3

[TFRP]

# FIG. 4

[TFRP (N=3, support≦6UEs]

| v1 (FOR INITIAL TRANSMISSION) | v1 (FOR REPETITION) | v2 | v3 |
|---|---|---|---|
| v2 | v4 | v4 | v5 |
| v3 | v5 | v6 | v6 |

FREQUENCY

↑

→ TIME

# FIG. 5

EP 3 911 057 A1

Same location | Same location

Top (or North)

100-1
V-LID#(n-4)

100-4
V-LID#n

100-6
V-LID#(n+1)

100-2
V-LID#(n-3) **Ascending Order**

100-7
V-LID#(n+2) *Right (or East)*

*Left (or West)*

100-3
V-LID#(n-2)

100-5
V-LID#(n-1)

100-8
V-LID#(n+3)

Bottom (or South)

10

# FIG. 6A

UE#3 ～100-3　UE#5 ～100-5　UE#7 ～100-7　UE#12 ～100-12
UE#1 ～100-1　UE#4 ～100-4　UE#8 ～100-8　UE#10 ～100-10
UE#2 ～100-2　UE#6 ～100-6　UE#9 ～100-9　UE#11 100-11～

V-LID#1　V-LID#3　V-LID#5　V-LID#7　V-LID#9　V-LID#11
V-LID#2　V-LID#4　V-LID#6　V-LID#8　V-LID#10　V-LID#12

10

# FIG. 6B

| UE#1 | U#E3 | UE#2 | UE#4 | UE#6 | UE#5 | UE#8 | UE#7 | UE#9 | UE#10 | UE#12 | UE#11 |
|------|------|------|------|------|------|------|------|------|-------|-------|-------|

V-LID#1　V-LID#2　V-LID#3　V-LID#4　V-LID#5　V-LID#6　V-LID#7　V-LID#8　V-LID#9　V-LID#10　V-LID#11　V-LID#12

EP 3 911 057 A1

# FIG. 7

| V-LID | | [TFRP] | | | | | |
|---|---|---|---|---|---|---|---|
| #1 UE#1 (FOR INITIAL TRANSMISSION) | #1 UE#1 (FOR REPETITION) | #2 UE#3 | #3 UE#2 | #7 UE#8 | #7 UE#8 | #8 UE#7 | #9 UE#9 |
| #2 UE#3 | #4 UE#4 | #4 UE#4 | #5 UE#6 | #8 UE#7 | #10 UE#10 | #10 UE#10 | #11 UE#12 |
| #3 UE#2 | #5 UE#6 | #6 UE#5 | #6 UE#5 | #9 UE#9 | #11 UE#12 | #12 UE#11 | #12 UE#11 |

V2X-Group (==Arrival Interval)

Sub-Group                    Sub-Group

FREQUENCY

TIME

EP 3 911 057 A1

FIG. 8A

UE#3 100-3
UE#1 100-1
UE#5 100-5
UE#4 100-4
UE#2 100-2
UE#12 100-12
UE#7 100-7
UE#8 100-8
UE#10 100-10
UE#6 100-6
UE#9 100-9
UE#11 100-11

10

FIG. 8B

| UE#1 | U#E3 | UE#2 | UE#4 | UE#5 | UE#8 | UE#6 | UE#7 | UE#9 | UE#10 | UE#12 | UE#11 |
|---|---|---|---|---|---|---|---|---|---|---|---|
| V-LID#1 | V-LID#2 | V-LID#3 | V-LID#4 | V-LID#5 | V-LID#6 | V-LID#7 | V-LID#8 | V-LID#9 | V-LID#10 | V-LID#11 | V-LID#12 |

# FIG. 9

V-LID        [TFRP]

V2X-Group (==Arrival Interval)

| #1 UE#1 | #1 UE#1 | #2 UE#3 | #3 UE#2 | #7 UE#6 | #7 UE#6 | #8 UE#7 | #9 UE#9 |
|---------|---------|---------|---------|---------|---------|---------|---------|
| #2 UE#3 | #4 UE#4 | #4 UE#4 | #5 UE#5 | #8 UE#7 | #10 UE#10 | #10 UE#10 | #11 UE#12 |
| #3 UE#2 | #5 UE#5 | #6 UE#8 | #6 UE#8 | #9 UE#9 | #11 UE#12 | #12 UE#11 | #12 UE#11 |

Sub-Group                Sub-Group

FREQUENCY

TIME

EP 3 911 057 A1

# FIG. 10

[TFRP]

| V2X-Group (==Arrival Interval) | | | |
|---|---|---|---|
| #1 (#7) | #1 (#7) | #2 (#8) | #3 (#9) |
| #2 (#8) | #4 (#10) | #4 (#10) | #5 (#11) |
| #3 (#9) | #5 (#11) | #6 (#12) | #6 (#12) |

V-LID

Sub-Group

FREQUENCY

TIME

# FIG. 11

EP 3 911 057 A1

# FIG. 12

EP 3 911 057 A1

# FIG. 13A

UE#2 ~100-2
UE#7 ~100-7  UE#9 ~100-9
UE#1 ~100-1  UE#5 ~100-5  UE#8 ~100-8
UE#4 ~100-4  UE#6 ~100-6

V-LID#1 V-LID#2    V-LID#3  V-LID#4  V-LID#7 V-LID#8    V-LID#10
V-LID#9

# FIG. 13B

| UE#1 | UE#2 | UE#4 | UE#5 | R | R | UE#6 | UE#7 | UE#8 | UE#9 | R | R |
|---|---|---|---|---|---|---|---|---|---|---|---|

V-LID#1  V-LID#2  V-LID#3  V-LID#4  V-LID#5  V-LID#6  V-LID#7  V-LID#8  V-LID#9  V-LID#10  V-LID#11

V-LID#12

EP 3 911 057 A1

EP 3 911 057 A1

# FIG. 14A

V-LID

|← — V2X-Group (==Arrival Interval) →|

| #1 UE#1 | #1 UE#1 | #2 UE#2 | #3 UE#4 | #7 UE#6 | #7 UE#6 | #8 UE#7 | #9 UE8 |
| #2 UE#2 | #4 UE#5 | #4 UE#5 | #5 R | #8 UE#7 | #10 UE#9 | #10 UE#9 | #11 R |
| #3 UE#4 | #5 R | #6 R | #6 R | #9 UE#8 | #11 R | #12 R | #12 R |

|← — Sub-Group →|← Sub-Group →|

# FIG. 14B

V-LID

| #1 UE#1 | #1 UE#1 | #2 UE#2 | #3 UE#4 | #7 UE#6 | #7 UE#6 | #8 UE#7 | #9 UE#8 |
| #2 UE#2 | #4 UE#5 | #4 UE#5 | #5 UE#3 | #8 UE#7 | #10 UE#9 | #10 UE#9 | #11 R |
| #3 UE#4 | #5 UE#3 | #6 R | #6 R | #9 UE#8 | #11 R | #12 R | #12 R |

# FIG. 14C

V-LID

| #1 UE#1 | #1 UE#1 | #2 UE#2 | #3 UE#3 | #7 UE#6 | #7 UE#6 | #8 UE#7 | #9 UE#8 |
| #2 UE#2 | #4 UE#4 | #4 UE#4 | #5 UE#5 | #8 UE#7 | #10 UE#9 | #10 UE#9 | #11 R |
| #3 UE#3 | #5 UE#5 | #6 R | #6 R | #9 UE#8 | #11 R | #12 R | #12 R |

35

# FIG. 15A

UE#2 100-2
UE#7 100-7 UE#9 100-9
UE#1 100-1
UE#5 100-5 UE#8 100-8
UE#3 100-3 UE#4 100-4 UE#6 100-6

UE3 comes in

# FIG. 15B

UE3 comes in

| UE#1 | UE#2 | UE#4 | UE#5 | R | R | UE#6 | UE#7 | UE#8 | UE#9 | R | R |
|------|------|------|------|---|---|------|------|------|------|---|---|

V-LID#1 V-LID#2 V-LID#3 V-LID#4 V-LID#5 V-LID#6 V-LID#7 V-LID#8 V-LID#9 V-LID#10 V-LID#11

V-LID#12

# FIG. 15C

| UE#1 | UE#2 | UE#3 | UE#4 | UE#5 | R | UE#6 | UE#7 | UE#8 | UE#9 | R | R |
|------|------|------|------|------|---|------|------|------|------|---|---|

V-LID#1 V-LID#2 V-LID#3 V-LID#4 V-LID#5 V-LID#6 V-LID#7 V-LID#8 V-LID#9 V-LID#10 V-LID#11

V-LID#12

EP 3 911 057 A1

# FIG. 16

V2X-Group (==Arrival Interval)

| #1 UE#1 | #1 UE#1 | #2 UE#2 | #3 UE#4 | #7 UE#6 | #7 UE#6 | #8 UE#7 | #9 UE8 |
|---------|---------|---------|---------|---------|---------|---------|--------|
| #2 UE#2 | #4 UE#5 | #4 UE#5 | #5 R | #8 UE#7 | #10 UE#9 | #10 UE#9 | #11 UE#1 |
| #3 UE#4 | #5 R | #6 R | #6 R | #9 UE#8 | #11 UE#1 | #12 R | #12 R |

Sub-Group              Sub-Group

# FIG. 17

| V-LID | | | | | | | |
|-------|-------|-------|-------|-------|-------|-------|-------|
| #1 UE#1 | #1 UE#1 | #2 UE#3 | #3 UE#2 | #7 UE#6 | #7 UE#8 | #8 UE#7 | #9 UE#8 |
| #2 UE#3 | #4 UE#4 | #4 UE#4 | #5 | #8 UE#7 | #10 UE#9 | #10 UE#9 | #11 |
| #3 UE#2 | #5 | #6 | #6 | #9 UE#8 | #11 | #12 | #12 |

[TFRP]
V2X-Group (==Arrival Interval)

Sub-Group — Sub-Group

FREQUENCY

TIME

EP 3 911 057 A1

## FIG. 18A

V-LID  starting point  [TFRP]  starting point

| | #1 UE#1 | #1 UE#1 | #2 UE#2 | #3 UE#4 | #1 UE#6 | #1 UE#6 | #2 UE#7 | #3 UE#8 | |
|---|---|---|---|---|---|---|---|---|---|
| | #2 UE#2 | #4 UE#5 | #4 UE#5 | #5 | #2 UE#7 | #4 UE#9 | #4 UE#9 | #5 | |
| | #3 UE#4 | #5 | #6 | #6 | #3 UE#8 | #5 | #6 | #6 | |

|← Sub Group#n →|← Sub Group#(n+1) →|

## FIG. 18B

V-LID  starting point  [TFRP]  starting point

| | #1 UE#2 | #1 UE#2 | #2 UE#4 | #3 UE#5 | #1 UE#7 | #1 UE#7 | #2 UE#8 | #3 UE#9 | |
|---|---|---|---|---|---|---|---|---|---|
| | #2 UE#4 | #4 UE#6 | #4 UE#6 | #5 | #2 UE#8 | #4 | #4 | #5 | |
| | #3 UE#5 | #5 | #6 | #6 | #3 UE#9 | #5 | #6 | #6 | |

|← Sub Group#n →|← Sub Group#(n+1) →|

EP 3 911 057 A1

EP 3 911 057 A1

## FIG. 19A

[TABLE_sci]

| UE#1 | UE#1 | ~~UE#2~~ | UE#4 | UE#6 | UE#6 | UE#7 | ~~UE#8~~ |
|------|------|------|------|------|------|------|------|
| ~~UE#2~~ | UE#5 | UE#5 | | UE#7 | UE#10 | UE#10 | |
| UE#4 | | | | ~~UE#8~~ | | | |

FREQUENCY → TIME

## FIG. 19B

[TABLE_ref(1)]

V-LID

| V2X-Group (= Arrival Interval) | | | | | | | |
|------|------|------|------|------|------|------|------|
| #1 UE#1 | #1 UE#1 | #2 UE#2 | #3 UE#4 | #7 UE#6 | #7 UE#6 | #8 UE#7 | #9 UE#8 |
| #2 UE#2 | #4 UE#5 | #4 UE#5 | #5 | #8 UE#7 | #10 UE#10 | #10 UE#10 | #11 |
| #3 UE#4 | #5 | #6 | #6 | #9 UE#8 | 11 | #12 | #12 |

| Sub Group#n | | | | Sub Group#(n+1) | | | |

# FIG. 20

Calculate
Correlation

**TABLE_sci**

| UE#1 | UE#1 | ~~UE#2~~ | UE#4 | UE#6 | UE#6 | UE#7 | ~~UE#8~~ |
|------|------|------|------|------|------|------|------|
| ~~UE#2~~ | UE#5 | UE#5 |  | UE#7 | UE#10 | UE#10 |  |
| UE#4 |  |  |  | ~~UE#8~~ |  |  |  |

V-LID

**TABLE_ref(1)**

| $\#1_{UE\#1}$ | $\#1_{UE\#1}$ | $\#2_{UE\#2}$ | $\#3_{UE\#4}$ | $\#7_{UE\#6}$ | $\#7_{UE\#6}$ | $\#8_{UE\#7}$ | $\#9_{UE\#8}$ |
|------|------|------|------|------|------|------|------|
| $\#2_{UE\#2}$ | $\#4_{UE\#5}$ | $\#4_{UE\#5}$ | #5 | $\#8_{UE\#7}$ | $\#10_{UE\#10}$ | $\#10_{UE\#10}$ | #11 |
| $\#3_{UE\#4}$ | #5 | #6 | #6 | $\#9_{UE\#8}$ | 11 | #12 | #12 |

V-LID

**TABLE_ref(2)**

| $\#1_{UE\#2}$ | $\#1_{UE\#2}$ | $\#2_{UE\#4}$ | $\#3_{UE\#6}$ | $\#7_{UE\#7}$ | $\#7_{UE\#7}$ | $\#8_{UE\#8}$ | $\#9_{UE\#9}$ |
|------|------|------|------|------|------|------|------|
| $\#2_{UE\#4}$ | $\#4_{UE\#6}$ | $\#4_{UE\#6}$ | #5 | $\#8_{UE\#8}$ | #10 | #10 | #11 |
| $\#3_{UE\#5}$ | #5 | #6 | #6 | $\#9_{UE\#9}$ | 11 | #12 | #12 |

⋮

⋮

EP 3 911 057 A1

# FIG. 21

```
                    ( START )──S10
                         │
                         ▼
        ┌─────────────────────────────────┐
        │  PRECONFIGURE TFRP AND V-LID,    │──S11
        │  AND THEIR MAPPING               │
        └─────────────────────────────────┘
                         │
                         ▼
                       ╱S12╲                        YES
                 ╱─────────────╲────────────────────────────────┐
                ╲ NEW UE COMES IN? ╱                            │
                 ╲─────────────╱                                ▼
                         │ NO                    ┌──────────────────────────────┐
                         ▼   S13                 │ NEW UE RECEIVES INFORMATION  │──S20
        ┌─────────────────────────────────┐     │ FROM OTHER UEs               │
        │  UE RECEIVES INFORMATION         │     └──────────────────────────────┘
        │  (LOCATION/RESOURCE) FROM        │                    │
        │  OTHER UEs                       │                    ▼         S21
        └─────────────────────────────────┘     ┌──────────────────────────────┐
                         │                       │ NEW UE SELECTS RESERVED TFRP │
                         │                       │ RESOURCE                     │
                         │                       └──────────────────────────────┘
                         │◄──────────────────────────────────┘
                         ▼
        ┌─────────────────────────────────┐
        │  UE BROADCASTS LOCATION          │──S14
        │  INFORMATION TO OTHER UEs        │
        └─────────────────────────────────┘
                         │
                         ▼
        ┌─────────────────────────────────┐
        │  UE SORTS OTHER UEs BASED ON     │──S15
        │  LOCATION INFORMATION            │
        └─────────────────────────────────┘
                         │
                         ▼
        ┌─────────────────────────────────┐
        │  UE EXCHANGES V-LID BASED PM     │──S16
        │  SORTED ORDERS                   │
        └─────────────────────────────────┘
                         │
                         ▼
        ┌─────────────────────────────────┐
        │  UE SELECTS TFRP RESOURCE BASED  │──S17
        │  ON V-LID                        │
        └─────────────────────────────────┘
                         │
                         ▼
      NO               ╱S18╲
    ┌────────────────╱        ╲
    │               ╲  OFF?    ╱
    │                ╲        ╱
    │                  ╲────╱
    │                    │ YES
    │                    ▼
    │                ( END )──S19
    └────────────────────┘
```

42

<table>
<tr><td colspan="2" align="center">**INTERNATIONAL SEARCH REPORT**</td><td>International application No.<br>PCT/JP2019/000575</td></tr>
</table>

**A. CLASSIFICATION OF SUBJECT MATTER**

Int.Cl. H04W72/02(2009.01)i, H04W4/40(2018.01)i, H04W72/04(2009.01)i, H04W92/18(2009.01)i

According to International Patent Classification (IPC) or to both national classification and IPC

**B. FIELDS SEARCHED**

Minimum documentation searched (classification system followed by classification symbols)
Int.Cl. H04W72/02, H04W4/40, H04W72/04, H04W92/18

Documentation searched other than minimum documentation to the extent that such documents are included in the fields searched

| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2018-513628 A (HUAWEI TECHNOLOGIES CO., LTD.) 24 May 2018, paragraphs [0075]-[0094] & US 2016/0295589 A1, paragraphs [0073]-[0091] & WO 2016/155647 A1 & CN 107535007 A | 1-2, 21-22<br>3-7, 13, 15<br>8-12, 14, 16-20 |
| Y<br><br>A | FUJITSU, "Enhancements of Configured Frequency-Time Resource Pattern in NR-V2X Transmission", 3GPP TSG-RAN WG1#95 R1-1812409, 02 November 2018, pp. 1-8 | 3<br><br>8-12, 14, 16-20 |
| Y<br><br>A | WO 2017/171909 A1 (INTEL CORPORATION) 05 October 2017, page 26, lines 8-13, page 32, line 14 to page 33, line 22 & TW 201742474 A | 4-7, 13<br><br>8-12, 14, 16-20 |
| Y<br><br>A | ITRI, "Discussion on Sidelink resource management techniques for NR V2X communication", 3GPP TSG RAN WG1#95 R1-1813103, 02 November 2018, pp. 1-4 | 15<br><br>8-12, 14, 16-20 |

☐ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>14 March 2019 (14.03.2019) | Date of mailing of the international search report<br>26 March 2019 (26.03.2019) |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3GPP TS 22.186 V16.0.0,* September 2018
- *3GPP TS 36.211 V15.2.0,* June 2018
- *3GPP TS 36.212 V15.2.1,* July 2018
- *3GPP TS 36.213 V15.2.0,* June 2018
- *3GPP TS 36.300 V15.2.0,* June 2018
- *3GPP TS 36.321 V15.2.0,* July 2018
- *3GPP TS 36.322 V15.1.0,* July 2018
- *3GPP TS 36.323 V15.0.0,* July 2018
- *3GPP TS 36.331 V15.2.2,* June 2018
- *3GPP TS 36.413 V15.2.0,* June 2018
- *3GPP TS 36.423 V15.2.0,* June 2018
- *3GPP TS 36.425 V15.0.0,* June 2018
- *3GPP TS 37.340 V15.2.0,* June 2018
- *3GPP TS 38.201 V15.0.0,* December 2017
- *3GPP TS 38.202 V15.2.0,* June 2018
- *3GPP TS 38.211 V15.2.0,* June 2018
- *3GPP TS 38.212 V15.2.0,* June 2018
- *3GPP TS 38.213 V15.2.0,* June 2018
- *3GPP TS 38.214 V15.2.0,* June 2018
- *3GPP TS 38.215 V15.2.0,* June 2018
- *3GPP TS 38.300 V15.2.0,* June 2018
- *3GPP TS 38.321 V15.2.0,* June 2018
- *3GPP TS 38.322 V15.2.0,* June 2018
- *3GPP TS 38.323 V15.2.0,* June 2018
- *3GPP TS 38.331 V15.2.1,* June 2018
- *3GPP TS 38.401 V15.2.0,* June 2018
- *3GPP TS 38.410 V15.0.0,* June 2018
- *3GPP TS 38.413 V15.0.0,* June 2018
- *3GPP TS 38.420 V15.0.0,* June 2018
- *3GPP TS 38.423 V15.0.0,* June 2018
- *3GPP TS 38.470 V15.2.0,* June 2018
- *3GPP TS 38.473 V15.2.1,* July 2018
- *3GPP TR 38.801 V14.0.0,* March 2017
- *3GPP TR 38.802 V14.2.0,* September 2017
- *3GPP TR 38.803 V14.2.0,* September 2017
- *3GPP TR 38.804 V14.0.0,* March 2017
- *3GPP TR 38.900 V15.0.0,* June 2018
- *3GPP TR 38.912 V15.0.0,* June 2018
- *3GPP TR 38.913 V15.0.0,* June 2018
- *3GPP TR 37.885 V15.0.0,* June 2018
- *3GPP TR 22.886 V15.1.0,* March 2017
- "RAN1 Chairman's Notes". *3GPP TSG RAN WG1 Meeting #94,* 20 August 2018
- "RAN1 Chairman's Notes". *3GPP TSG RAN WG1 Meeting #94bis,* 08 October 2018
- "RAN1 Chairman's Notes". *3GPP TSG RAN WG1 Meeting #95,* 12 November 2018